# EUROPEAN PATENT SPECIFICATION

(11) **EP 4 685 697 B1**
(45) Date of publication and mention of the grant of the patent: **19.08.2026**
(21) Application number: 25209242.4
(22) Date of filing: 05.04.2024
(51) Int. Cl.: B60W 50/14, G06V 20/58, G06V 10/762, G06V 10/82, G06N 3/045

(54) **GENERATIVE DRIVING MODEL**
GENERATIVES FAHRMODELL
MODÈLE DE CONDUITE GÉNÉRATIF

(30) Priority: 07.04.2023 US 202363458064 P; 26.04.2023 US 202363498493 P
(43) Date of publication of application: 28.01.2026
(62) Document number(s) of the earlier application(s) in accordance with Art. 76 EPC: 24722970.1 / 4 681 180
(73) Proprietor: Netradyne, Inc., San Diego, CA 92122 (US)
(72) Inventor: JULIAN, David Jonathan, San Diego, California 92122 (US); NAG, Anirban, San Diego, California 92122 (US); CHANDRAN, Nishanth, San Diego, California 92122 (US); VERMA, Pratik, San Diego, California 92122 (US); AGRAWAL, Avneesh, San Diego, California 92122 (US); AKKARACHITTOR, Pramod, San Diego, California 92122 (US); YEDLA, Arvind, San Diego, California 92122 (US)
(74) Representative: Simmons & Simmons

(56) References cited:
- DONMEZ BIRSEN ET AL: "Differences in Off-Road Glances: Effects on Young Drivers' Performance", JOURNAL OF TRANSPORTATION ENGINEERING, vol. 136, no. 5, 1 May 2010 (2010-05-01), US, pages 403 - 409, XP093363551, ISSN: 0733-947X, DOI: 10.1061/(ASCE)TE.1943-5436.0000068
- NAJI HASAN A.H. ET AL: "Investigating the Significant Individual Historical Factors of Driving Risk Using Hierarchical Clustering Analysis and Quasi-Poisson Regression Model", SENSORS, vol. 20, no. 8, 19 April 2020 (2020-04-19), CH, pages 2331, XP093363202, ISSN: 1424-8220, DOI: 10.3390/s20082331

## Description

### TECHNICAL FIELD

This application relates generally to using generative artificial intelligence for automated alerts or autonomous driving.

### BACKGROUND

Automated driving systems have garnered significant interest and investment in recent years due to their potential to revolutionize transportation by enhancing safety, efficiency, and convenience. These systems utilize various sensors, such as cameras, LiDAR, and radar, in conjunction with sophisticated algorithms, to perceive the surrounding environment and make driving decisions autonomously.

One important aspect of automated driving systems is their ability to provide timely alerts to drivers or take corrective actions to prevent accidents or mitigate risks. These alerts can range from simple notifications about upcoming obstacles to more complex interventions, such as automatic braking or steering.

While machine learning techniques have shown promise in improving the capabilities of automated driving systems, several challenges persist, hindering their widespread adoption and effectiveness. For example, one challenge with using machine learning for autonomous driving or alert generation is that machine learning models often rely heavily on large and diverse datasets for training. However, obtaining high-quality and diverse data representative of all possible driving scenarios is challenging. Variability in environmental conditions, road infrastructure, and human behavior adds complexity to the data collection process. Another challenge with using machine learning for autonomous driving or alert generation is that driving environments are inherently complex, with numerous factors influencing driving decisions. Machine learning algorithms must navigate through a vast array of scenarios, including adverse weather conditions, unpredictable pedestrian or cyclist behavior, and complex traffic patterns. Designing machine learning algorithms or any other type of algorithms that are capable of handling this complexity while ensuring safety and reliability is a significant challenge. DONMEZ BIRSEN ET AL: "Differences in Off-Road Glances: Effects on Young Drivers' Performance", JOURNAL OF TRANSPORTATION ENGINEERING, vol. 136, no. 5, 1 May 2010 (2010-05-01), pages 403-409, relates to a driving simulator study that was conducted to assess the level of engagement with an in-vehicle secondary task. A cluster analysis is used to group drivers based on eye glance behavior and driving performance into drivers with low risk, moderate risk, and high risk behavior. A subgroup of these drivers was provided with feedback to help modulate their distracting activities. NAJI HASAN A.H. ET AL: "Investigating the Significant Individual Historical Factors of Driving Risk Using Hierarchical Clustering Analysis and Quasi-Poisson Regression Model",SENSORS, vol. 20, no. 8, 19 April 2020 (2020-04-19), page 2331, relate to a study exploring the contributing historical factors of driving risk with hierarchical clustering analysis and the quasi-Poisson regression model. The dataset of the study was collected from two sources: naturalistic driving experiments and self-reports. The drivers who participated in the naturalistic driving experiment were categorized into four risk groups according to their near-crash frequency with the hierarchical clustering method. Moreover, a quasi-Poisson model was used to identify the essential factors of individual driving risk.

### SUMMARY

Systems may attempt to use image processing techniques for autonomous driving or automatic alert generation. For example, a computing system located on a vehicle (e.g., operating within or controlling a vehicle) may continuously receive image or video data of the environment surrounding or inside a vehicle. The computing system may apply a rules engine or a machine learning algorithm to images to determine whether to generate an alert (e.g., an audible or visual alert, such as to alert a vehicle ahead is within a proximity threshold of the vehicle) or an operational control to use to control the vehicle. However, given the amount of data that is typically in any singular image, let alone multiple images of a video, the rules engine or machine learning algorithm may not be able to account for every situation or scenario depicted in the image or video. Thus, the computing system may have gaps and not accurately identify instances to generate an alert or change operation of the vehicle that may be difficult to remove or overcome.

A computing device implementing the systems and methods described herein may overcome the aforementioned technical problems by implementing a machine learning model that is configured to process text-based objects and/or tokens representing objects or an environment for alert generation or autonomous vehicle control. To do so, for example, a computing device of a vehicle may receive a sequence of images depicting the environment surrounding the vehicle or inside of the vehicle. The computing device can execute a neural network to detect objects that are depicted in the sequence of images. The computing device can convert the detected objects into text-based objects in a text-based format and/or a first plurality of tokens that represent the current state of the objects and/or the environment around or within the vehicle. The computing device can input the text-based objects in the text-based format or the first plurality of tokens into a machine learning model, such as a machine learning language processing model configured to process text, and execute the machine learning model. The machine learning model can output a second plurality of tokens based on the execution. In doing so, the machine learning model can output one or more characters or words that represent a future state (e.g., location, size, and/or orientation) of the objects in an image or tokens that otherwise represent the future state. The computing device can analyze the tokens using a rules engine or a machine learning model to determine whether to generate an alert or an instruction to control the vehicle. The computing device can generate an alert or control the vehicle according to the analysis. In this way, the computing device can use a combination of machine learning models to take into account objects and/or features in a sequence of images that may not otherwise be considered when making a determination as well as predict movement or changes in location and/or orientation of the objects to use to generate alerts or make self-driving decisions, which can improve the accuracy of alerts and/or self-driving decisions by the computing device.

In one embodiment, a method can include receiving, by one or more processors from a camera mounted to or in a vehicle, a sequence of images of an environment surrounding the vehicle or within the vehicle; generating, by the one or more processors, a first plurality of tokens based on the sequence of images; executing, by the one or more processors, a machine learning model using the first plurality of tokens to generate a second plurality of tokens, the second plurality of tokens representing a future state of the environment surrounding the vehicle or within the vehicle; and generating, by the one or more processors, a driver alert based on the future state of the environment surrounding the vehicle or within the vehicle.

Generating the first plurality of tokens can include executing, by the one or more processors, a neural network to generate the first plurality of tokens based on the sequence of images. Executing the machine learning model using the first plurality of tokens can include executing, by the one or more processors, a neural network comprising a transformer model using the first plurality of tokens to generate the second plurality of tokens. Executing the neural network including the transformer model can include executing, by the one or more processors, a large language model using the first plurality of tokens as input. Generating the driver alert can include generating, by the one or more processors, an audible or visual alert within the vehicle.

The driver alert can cause the vehicle to adjust operation based on a location of one or more objects indicated by the second plurality of token representing the future state of the one or more objects. The driver alert can cause the vehicle to adjust a velocity of the vehicle based on a proximity to the vehicle of one or more objects indicated by the second plurality of token representing the future state of the one or more objects. Executing the machine learning model can include executing, by the one or more processors, the machine learning model using an identification of a driver of the vehicle in combination with the first plurality of tokens to generate the second plurality of tokens representing the future state of one or more objects within the environment surrounding the vehicle or within the vehicle.

Executing the machine learning model can include executing, by the one or more processors, the machine learning model using an identification of a vehicle type of the vehicle in combination with the first plurality of tokens to generate the second plurality of tokens representing the future state of one or more objects within the environment surrounding the vehicle or within the vehicle. The method can further include training, by the one or more processors, the machine learning model using a training dataset comprising a sequence of images captured by the camera and a label image captured by the camera subsequent to the sequence of images as a ground truth of an expected output for the machine learning model based on the sequence of images.

Generating the first plurality of tokens can include detecting, by the one or more processors, one or more objects within the environment surrounding the vehicle or within the vehicle using a neural network; and converting the detected one or more objects into an American Standard Code for Information Interchange (ASCII) format, wherein executing the machine learning model using the first plurality of tokens comprises executing, by the one or more processors, the machine learning model using the detected one or more objects in the ASCII format to generate the second plurality of tokens representing the future state of the one or more objects.

The method can include executing, by the one or more processors, the machine learning model using the first plurality of tokens to generate a third plurality of tokens representing a first future state of the environment surrounding the vehicle or within the vehicle; and executing, by the one or more processors, the machine learning model using third plurality of tokens to generate the second plurality of tokens representing the future state of the environment surrounding the vehicle or within the vehicle.

Generating the first plurality of tokens can include executing, by the one or more processors, a neural network to detect one or more objects in the sequence of images; converting, by the one or more processors, the detected one or more objects into text-based objects in a text-based format; and converting, by the one or more processors, one or more objects in the text-based format to the first plurality of tokens according to a look-up table that maps text-based objects to tokens. The method can further include executing, by the one or more processors, a neural network to detect one or more objects in the environment surrounding or in the vehicle depicted in the sequence of images; and converting, by the one or more processors, the detected one or more objects into the first plurality of tokens. The first plurality of tokens can be one or more text-based objects in a text-based format.

In another embodiment, a system can include one or more processors configured by machine-readable instructions to receive, from a camera mounted to or in a vehicle, a sequence of images of an environment surrounding the vehicle or within the vehicle; generate a first plurality of tokens based on the sequence of images; execute a machine learning model using the first plurality of tokens to generate a second plurality of tokens, the second plurality of tokens representing a future state of the environment surrounding the vehicle or within the vehicle; and generate a driver alert based on the future state of the environment surrounding the vehicle or within the vehicle. The one or more processors can be configured to generate the first plurality of tokens by executing a neural network to generate the first plurality of tokens based on the sequence of images.

In another embodiment, a method can include receiving, by one or more processors from a camera mounted to or in a vehicle, a sequence of images of an environment surrounding the vehicle or within the vehicle; generating, by the one or more processors, a first plurality of tokens based on the sequence of images; executing, by the one or more processors, a machine learning model using the first plurality of tokens to generate a second plurality of tokens, the second plurality of tokens comprising a textual representation of the sequence of images; and generating, by the one or more processors, a driver alert based on the textual representation of the sequence of images.

Generating the first plurality of tokens can include executing, by the one or more processors, a neural network to generate the first plurality of tokens based on the sequence of images. Executing the machine learning model using the first plurality of tokens can include executing, by the one or more processors, a neural network comprising a transformer model using the first plurality of tokens to generate the second plurality of tokens.

In another embodiment, a method can include receiving, by one or more processors, a plurality of datasets for a plurality of drivers, each of the plurality of datasets comprising driving data for a different driver of the plurality of drivers; executing, by the one or more processors, a machine learning language processing model using the plurality of datasets to generate an embedding for each of the plurality of drivers; executing, by the one or more processors, a clustering computer model to generate a plurality of clusters of the embeddings for the plurality of drivers; determining, by the one or more processors, a first value of a first driving attribute of a first set of drivers of a first cluster of the plurality of clusters and a second value of the first driving attribute of a second set of drivers of a second cluster of the plurality of clusters, wherein the first value represents safer driving than the second value; and responsive to identifying, by the one or more processors, a second driving attribute by determining a third value of the second driving attribute of the first set of drivers of the first cluster and a fourth value of the second driving attribute of the second set of drivers of the second cluster, wherein the third value represents safer driving than the fourth value, generating, by the one or more processors, a message to an electronic device of each driver of the second cluster for improving the second driving attribute.

The method can further include receiving, by the one or more processors from a remote computer, traffic data regarding the plurality of drivers; and determining, by the one or more processors, the first value of the first driving attribute of the first set of drivers and the second value of the first driving attribute of the second set of drivers of the second cluster of the plurality of clusters based on the received traffic data. Determining the first value of the first driving attribute can include determining, by the one or more processors, a first number of driving accidents in which the first set of drivers were involved within a defined time period. Determining the second value of the first driving attribute can include determining, by the one or more processors, a second number of driving accidents in which the second set of drivers were involved within the defined time period, the second value higher than the first value.

Determining the third value of the second driving attribute can include determining, by the one or more processors, a first average speed of the first set of drivers. Determining the fourth value of the second driving attribute can include determining, by the one or more processors, a second average speed of the second set of drivers, the third value lower than the fourth value. Determining the second value of the first driving attribute of the second set of drivers of the second cluster and the fourth value of the second driving attribute of the second set of drivers of the second cluster can be performed responsive to determining, by the one or more processors, a second cluster score of the second cluster is lower than a threshold.

The method can include determining the second value of the first driving attribute of the second set of drivers of the second cluster and the fourth value of the second driving attribute of the second set of drivers of the second cluster is performed responsive to determining, by the one or more processors, a second cluster score of the second cluster is lower than a first cluster score of the first cluster. The method can further include determining, by the one or more processors, a driver score for each of the plurality of drivers based on a cluster containing the embedding for the driver; and generating, by the one or more processors, a record containing the driver score for each of the plurality of drivers.

Determining the driver score for each of the plurality of drivers can include assigning, by the one or more processors, a different cluster score to each of the plurality of clusters; and determining, by the one or more processors, the driver score for each of the plurality of drivers based on the cluster score assigned to the cluster containing the embedding for the driver. The method can further include receiving, by the one or more processors from a remote computer, traffic data regarding the plurality of drivers. Assigning the cluster scores to the plurality of clusters can include determining, by the one or more processors, a cluster score for a second cluster of the plurality of clusters based on received traffic data for the second cluster.

Determining the cluster score for the second cluster based on the received traffic data for the second cluster can include determining, by the one or more processors, the cluster score based on a number of accidents or traffic infractions that are identified in the received traffic data for the second cluster. The method can further include assigning, by the one or more processors, a different driver score range to each of the plurality of clusters, at least one driver score range comprising a plurality of driver scores; and determining, by the one or more processors, a driver score for each of the plurality of drivers based on the driver score range assigned to a cluster that includes the embedding for the driver.

Executing the machine learning language processing model using the plurality of datasets to generate the embedding for each of the plurality of drivers can include executing, by the one or more processors, a neural network comprising a transformer model using the plurality of datasets to generate the embedding for each of the plurality of drivers.

In another embodiment, one or more processors configured by machine-readable instructions to receive a plurality of datasets for a plurality of drivers, each of the plurality of datasets comprising driving data for a different driver of the plurality of drivers; execute a machine learning language processing model using the plurality of datasets to generate an embedding for each of the plurality of drivers; execute a clustering computer model to generate a plurality of clusters of the embeddings for the plurality of drivers; determine a first value of a first driving attribute of a first set of drivers of a first cluster of the plurality of clusters and a second value of the first driving attribute of a second set of drivers of a second cluster of the plurality of clusters, wherein the first value represents safer driving than the second value; and responsive to identifying a second driving attribute by determining a third value of the second driving attribute of the first set of drivers of the first cluster and a fourth value of the second driving attribute of the second set of drivers of the second cluster, wherein the third value represents safer driving than the fourth value, generate a message to an electronic device of each driver of the second cluster for improving the second driving attribute.

The one or more processors can be further configured to receive, from a remote computer, traffic data regarding the plurality of drivers; and determine the first value of the first driving attribute of the first set of drivers and the second value of the first driving attribute of the second set of drivers of the second cluster of the plurality of clusters based on the received traffic data. The one or more processors can be configured to determine the first value of the first driving attribute by determining a first number of driving accidents in which the first set of drivers were involved within a defined time period. The one or more processors can be configured to determine the second value of the first driving attribute by determining a second number of driving accidents in which the second set of drivers were involved within the defined time period, the second value higher than the first value.

The one or more processors can be configured to determine the third value of the second driving attribute by determining a first average speed of the first set of drivers. The one or more processors can be configured to determine the fourth value of the second driving attribute by determining a second average speed of the second set of drivers, the third value lower than the fourth value. The one or more processors can be configured to determine the second value of the first driving attribute of the second set of drivers of the second cluster and the fourth value of the second driving attribute of the second set of drivers of the second cluster is performed responsive to determining a second cluster score of the second cluster is lower than a threshold.

The one or more processors can be configured to determine the second value of the first driving attribute of the second set of drivers of the second cluster and the fourth value of the second driving attribute of the second set of drivers of the second cluster is performed responsive to determining a second cluster score of the second cluster is lower than a first cluster score of the first cluster. The one or more processors can be further configured to determine a driver score for each of the plurality of drivers based on a cluster containing the embedding for the driver; and generate a record containing the driver score for each of the plurality of drivers. The one or more processors can be configured to determine the driver score for each of the plurality of drivers by assigning a different cluster score to each of the plurality of clusters; and determining the driver score for each of the plurality of drivers based on the cluster score assigned to the cluster containing the embedding for the driver.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects can be combined and it will be readily appreciated that features described in the context of one aspect of the invention can be combined with other aspects. Aspects can be implemented in any convenient form. For example, by appropriate computer programs, which may be carried on appropriate carrier media (computer-readable media), which may be tangible carrier media (e.g., disks) or intangible carrier media (e.g., communications signals). Aspects may also be implemented using suitable apparatus, which may take the form of programmable computers running computer programs arranged to implement the aspect. As used in the specification and in the claims, the singular form of 'a', 'an', and 'the' include plural referents unless the context clearly dictates otherwise.

### BRIEF DESCRIPTION OF THE DRAWINGS

Non-limiting embodiments of the present disclosure are described by way of example with reference to the accompanying figures, which are schematic and are not intended to be drawn to scale. Unless indicated as representing the background art, the figures represent aspects of the disclosure. For purposes of clarity, not every component may be labeled in every drawing. In the drawings:
**FIG. 1** illustrates an example environment showing a computing system for a generative driving model, according to an embodiment;
**FIG. 2** illustrates a flowchart of a method for implementing a generative driving model, according to an embodiment;
**FIG. 3** illustrates text-based objects in a text-based format, according to an embodiment;
**FIG. 4** illustrates a flowchart of a method for implementing a generative driving model, according to an embodiment;
**FIG. 5** illustrates a framework for fine tuning a large language model (LLM), according to an embodiment;
**FIG. 6** illustrates a framework for a chatbot using an LLM, according to an embodiment.
**FIG. 7** illustrates an example environment showing a computing system for implementing a generative artificial intelligence model for cohort analysis, according to an embodiment;
**FIG. 8** illustrates a flowchart of a method for implementing a generative artificial intelligence model for cohort analysis, according to an embodiment;
**FIG. 9** illustrates a vector space that has been populated with clusters of embeddings representing the driving data of different drivers, according to an embodiment; and
**FIG. 10** illustrates a flowchart of a method for implementing a generative artificial intelligence model for cohort analysis, according to an embodiment.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. The illustrative embodiments described in the detailed description are not meant to be limiting of the subject matter presented.

Autonomous vehicle or assisted vehicle guidance can use image analysis to generate alerts or make self-driving decisions. However, while images can play a role in the functioning of self-driving technology, real-time image analysis can be improved upon for more accurate and/or safe self-driving and/or alert generation. For example, images can be blurry for various reasons, such as because of adverse weather conditions (e.g., heavy rain, snow, or fog), which can limit the system's ability to accurately interpret the surroundings. Additionally, variations in lighting conditions, such as glare from the sun or darkness at night, can also affect image quality and interpretation. Finally, identifying and accurately categorizing objects in real-time from images poses other challenges, particularly with complex scenarios in which objects may partially occlude each other or have varying appearances.

For example, a computing system located on a vehicle (e.g., operating within or otherwise controlling a vehicle) may continuously receive image or video data of the environment surrounding or inside a vehicle. The computing system may apply a rules engine or a machine learning algorithm to images to determine whether to generate an alert (e.g., an audible or visual alert, such as to alert a vehicle ahead is within a proximity threshold of the vehicle) or an operational control to use to control the vehicle (e.g., turn right onto a new road or apply sudden or emergency brake). However, given the amount of data that is typically in any singular image, let alone multiple images of a video or a sequence of images, as well as the variation in quality in images that may be present depending on the environment, the rules engine or machine learning algorithm may not be able to account for every situation or scenario depicted in the image or video. Thus, the computing system may generate false alerts or make improper driving decisions that may cause vehicles relying on such systems to be more dangerous. A system that is configured to generate alerts and/or decisions based on more data than data from a single image (e.g., data generated from images and/or from other sources, such as data from sensors) can improve functioning of an automatic alert generation system and/or self-driving system.

To address these technical challenges, a computer or computing device implementing the systems and methods described herein may implement a machine learning model that is configured to process tokenized representations of the content of images or image sequences for alert generation or autonomous vehicle control. The tokenized representation may be a text-based representation of objects detected by a perception engine. For example, a computing device of a vehicle may receive a sequence of images depicting the environment surrounding the vehicle or the inside of the vehicle. The computing device can execute a neural network (e.g., an object detection neural network) or another type of machine learning model to tokenize relevant content (e.g., detected objects that are depicted) in the sequence of images. In some embodiments, the computing device can convert the detected objects into text-based objects in a text-based format, such as text descriptors of the objects (e.g., tree, sedan, pedestrian, etc.) or American Standard Code for Information Interchange (ASCII) representations of the objects. The computing device can input the text-based objects in the text-based format into a machine learning model, such as a machine learning language processing model (e.g., a large language model or a neural network that may be or include a transformer model configured to process tokenized versions of the objects or text-based objects). The computing device can execute the machine learning model. The machine learning model can output a plurality of tokens containing characters, words, or segments of words based on the execution. The plurality of tokens can describe or represent an image depicting a future state (e.g., a future state a defined time after the last captured image of the sequence of images) of the objects and/or the environment in the image. For instance, the image can be a prediction of an image that would follow the last image of the sequence of images. The computing device can analyze the tokens using a rules engine or a machine learning model to determine whether to generate an alert (e.g., an audible or visual alert) or an instruction to control the vehicle (e.g., determine whether to slow down to avoid a pedestrian or stop at a stop light). The computing device can generate an alert or control the vehicle according to the analysis. In this way, the computing device can use a combination of machine learning models to take into account objects or visual features in a sequence of images that may not otherwise be considered when making a determination, make decisions based on further images to reduce the chances of improper decisions or alert generations that are caused by blurry or poorly lit images, as well as predict movement or changes in location of the objects (e.g., predict intents of pedestrians) to use to generate alerts or make self-driving decisions, which can improve the accuracy of alerts and/or self-driving decisions by the computing device.

In some cases, the computing device can further improve the accuracy of autonomous driving decision-making or alert generation using recursive processing techniques. For example, subsequent to the machine learning language processing model generating the tokens representing the future state of objects depicted in the sequence of images, the computing device, may feed the output tokens back into the machine learning language processing model with the original sequence of images or at least a set of the sequence of images (e.g., a defined number of the most recently captured images). The computing device can execute the machine learning language processing model based on the sequence of images as well as the tokens to generate a second plurality of tokens. The second plurality of tokens can represent a second future state of the objects subsequent to (e.g., a defined time after) the future state of the tokens that were initially generated. The computing device can iteratively feed the tokens back into the machine learning language processing model in this way any number of times for a defined number of iterations. Responsive to completing the defined number of iterations, the computing device can analyze the last generated tokens and/or all of or a defined number of the sequence of images or generated tokens representing the different future states for alert generation or autonomous driving decision-making.

In some cases, the computing device can personalize alerts that the computing device generates. For example, the machine learning language processing model may be configured or trained to generate alerts based on the type of driver or the type of vehicle for which the machine learning language processing model is generating the alert. The machine learning language processing model can do so, for example, by being trained to generate tokens of one or more images depicting future states (e.g., locations, positions, and/or orientations) of objects in the environment surrounding the vehicle based on a sequence of images and an identifier of a type of driver and/or a type of vehicle for which the machine learning langue processing model is generating the future states. The type of driver or type of vehicle may matter because different types of drivers or types of vehicles may operate differently (e.g., turn at different turn radiuses or travel at different speeds) that may affect the states of the objects relative to the vehicle. Accordingly, by using a machine learning language processing model that is configured to generate tokens indicating a future state of objects in an image based on identifications of types of drivers and/or types of vehicles, the computing device can generate tokens that more accurately reflect the future state of objects in the image.

### Generative Driving Model

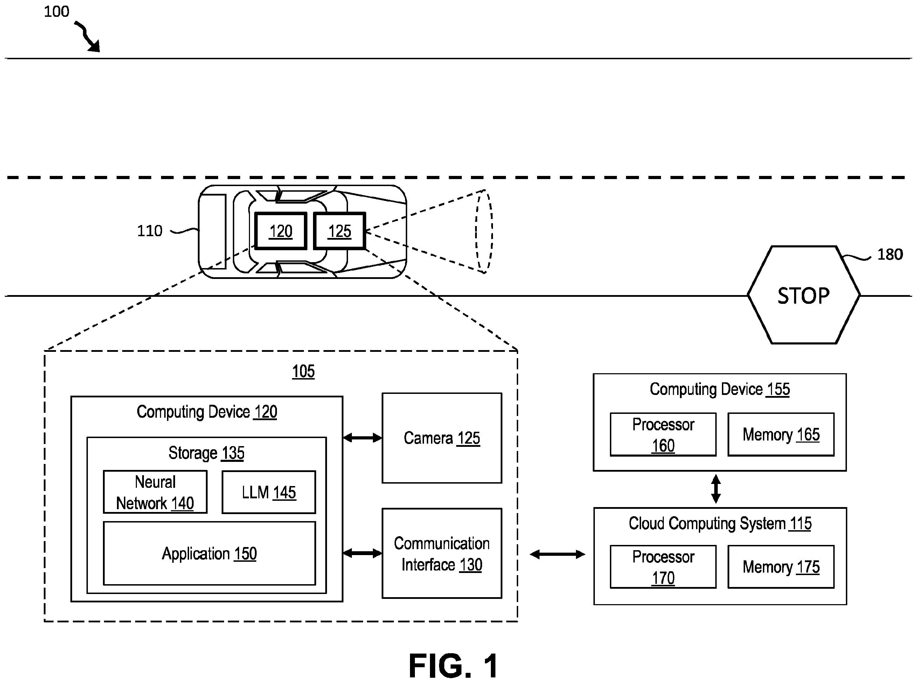

**FIG. 1** depicts an example environment that includes example components of a system in which such a computer can selectively generate instructions to generate alerts for driving events of different driving event types. Various other system architectures may include more or fewer features and/or may utilize the techniques described herein to achieve the results and outputs described herein. Therefore, the system depicted in **FIG. 1** is a non-limiting example.

**FIG. 1** illustrates a system **100,** which includes components of a generative driving model system **105** for using a generative artificial intelligence model on images captured by a camera attached to or integrated on or within a vehicle **110** for autonomous driving or alert generation. The system **100** can include the generative driving model system **105,** the vehicle **110,** and/or a cloud computing system **115.** The generative driving model system **105** can include a computing device **120,** a camera **125,** and/or a communication interface **130.** The generative driving model system **105** may include an alert device, such as an audio alarm, a warning light, another type of visual indicator, and/or a haptic feedback device (e.g., one or more vibrating seats or a vibrating steering wheel). The generative driving model system **105** can be mounted on a dashboard, windshield, or other area inside the vehicle **110.** The system **100** is not confined to the components described herein and may include additional or other components, not shown for brevity, which are to be considered within the scope of the embodiments described herein.

The vehicle **110** can be any type of vehicle, such as a car, truck, van, sport-utility-vehicle (SUV), motorcycle, semi-tractor trailer, or other vehicle that can be driven on a road or another environment. The vehicle **110** can be operated by a user, or, in some implementations, can include an autonomous vehicle control system (not pictured) that navigates the vehicle **110** or provides navigation assistance to an operator of the vehicle **110.** The vehicle **110** can be a vehicle of a fleet of vehicles that are owned and/or operated by an entity (e.g., a business or organization) to transport goods, materials, and/or individuals.

The vehicle **110** can include the generative driving model system **105,** which can be used to detect objects within images captured by the camera **125** when the vehicle is parked and/or as the vehicle is driving down a road and generate alerts or control the vehicle **110** based on the detected objects. As outlined above, the generative driving model system **105** can include the computing device **120.** The computing device **120** can be mounted on or in the vehicle **110.** In some cases, the computing device **120** is a computing device that automatically controls the vehicle for self-driving or generates audible or visual alerts via devices within the vehicle **110.**

The computing device **120** can include the storage **135,** which can store images and/or video captured by the camera **125,** a neural network **140,** a large language model (LLM) **145,** and an application **150.** The storage **135** can be a computer-readable memory that can store or maintain any of the information described herein that is generated, accessed, received, transmitted, or otherwise processed by the computing device **120.** The storage **135** can maintain one or more data structures, which may contain, index, or otherwise store each of the values, pluralities, sets, variables, vectors, numbers, or thresholds described herein. The storage **135** can be accessed using one or more memory addresses, index values, or identifiers of any item, structure, or region of memory maintained by the storage **135.**

The storage **135** may be internal to the computing device **120** or may exist externally to the computing device **120** and accessed via a suitable bus or interface. In some implementations, the storage **135** can be distributed across many different storage elements. The computing device **120** (or any components thereof) can store, in one or more regions of the memory of the storage **135,** the results of any or all computations, determinations, selections, identifications, generations, constructions, or calculations in one or more data structures indexed or identified with appropriate values.

The computing device **120** can include or be in communication with a communication interface **130** that can communicate wirelessly with other devices. The communication interface **130** of the computing device **120** can include, for example, a Bluetooth communications device, a Wi-Fi communication device, or a 5G/LTE/3G cellular data communications device. The communication interface **130** can be used, for example, to transmit any information described herein to the cloud computing system **115,** including images and/or videos that the computing device **120** receives from the camera **125.** The communication interface **130** can also be used, for example, to receive indications of driving events that the processor detects from the images or videos, in some cases with the images or videos from which the processor detects the driving events.

The camera **125** can include any type of camera or multiple cameras that are capable of capturing images or videos of the environment surrounding the vehicle **110** and/or within the vehicle **110,** including a configuration having an external camera view of the surrounding environment and a cabin-facing camera view of the driver. The camera **125** may periodically capture images or video while the vehicle **110** is turned on and parked and/or as the vehicle **110** is moving. For example, the camera **125** can capture an image or video of a stop sign **180** as the vehicle **110** approaches or passes the stop sign **180.** In another example, the camera **125** can capture an image or video of the driver before, during, and/or after a driving event. In some cases, the camera **125** can capture images or video when the vehicle **110** is turned off (e.g., when the vehicle is off but in a surveillance mode). The camera **125** may capture images or videos and transmit the images or videos to the computing device **120.** The computing device **120** may receive the images or videos and store images or videos in the storage **135** and/or transmit the images or videos to other vehicles or to the cloud computing system **115.**

The cloud computing system **115** can be or include one or more computing devices that are configured to train and distribute machine learning models for object detection from images and/or decisions for alert generation or autonomous driving decisions. The cloud computing system can include a processor **170** and/or a memory **175.** The cloud computing system **115** may receive training sequences of images from computing devices of multiple vehicles and train an individual machine learning language processing model to generate tokens indicating a future state of objects depicted in a sequence of images (e.g., the future state of the objects in a new image). The tokens can be a group of words, subwords (e.g., portions of individual words or across different sequential words), or characters. The cloud computing system **115** can train the machine learning language processing model to do so based further on sensor data (e.g., acceleration, speed, gyroscope data, weather data, etc.) that correspond to the individual sequences of images, identifications of types of drivers that were driving when the sequences of images were captured, and/or identifications of the types of vehicles that were being driven. The cloud computing system **115** may train one or more machine learning language processing models using such sequences of images and/or other data collected from different vehicles (e.g., vehicles of a fleet of vehicles) and transmitted to the cloud computing system **115** over a network. The cloud computing system **115** can train the machine learning language processing model to do so and transmit the machine learning language processing models (e.g., copies of the machine learning language processing models) to computing devices of vehicles (e.g., the computing device **120**) once the machine learning language processing model or models are sufficiently trained. After transmitting the machine learning language processing models to the computing devices, the cloud computing system **115** can continue to train a local version of the machine learning language processing models with training images to improve the machine learning language processing models and/or account for changes in new objects that appear in the environment and/or changes in the cameras that are capturing the images. The cloud computing system **115** can provision the updated models to the computing devices of vehicles after each training iterations and/or at defined time intervals such that the computing devices can continue to use a more accurate machine learning language processing model over time.

The cloud computing system **115** may use parallel processing techniques or have different computers perform different tasks to facilitate the operations described herein. For example, one computer of the cloud computing system **115** can establish connections with the computers of vehicles to receive sequences of images from generative driving model systems of the vehicles (e.g., the generative driving model system **105**), another computer of the cloud computing system **115** can process the received sequences of images using a machine learning language processing model to generate tokens of objects or features depicted in the sequences of images in a future state and train the machine learning language processing model based on the prediction (e.g., by using backpropagation techniques), and another computer of the cloud computing system **115** can establish connections with different computing devices of vehicles and transmit the trained machine learning language processing model to the different computing devices to use for autonomous driving and/or alert generation. Any combination of one or more of the computers of the cloud computing system **115** and/or the generative driving model system **105** may perform such processes.

A computing device **155** can be a computer that is configured to receive messages and/or present messages or other data on a user interface. The computing device **155** can include a processor **160** and a memory **165.** The computing device **155** can be any type of computing device, such as a mobile phone, laptop computer, desktop computer, smart watch, gaming console, personal data assistant, dashboard computer, or other computing device. A driver associated with the vehicle **110** can own or otherwise access the computing device **155** to access a platform provided by the cloud computing system **115** that manages accounts for different drivers (e.g., drivers of a driver fleet managed by the cloud computing system **115**). The driver can access the platform through the account for the driver that the cloud computing system **115** stores in the memory **165.**

The camera **125** may include any number and any type of camera or video camera that can capture images or video of areas surrounding and/or inside the vehicle **110.** The camera **125** can communicate with the computing device **120** via a vehicle interface, which may include a CAN bus or an on-board diagnostics interface. The camera **125** can capture images or video and transmit the captured images or video to the computing device **120.** The computing device **120** can receive the captured images or video and transmit the images or video to the cloud computing system **115** to use to detect driving events for a driver of the vehicle **110.**

The computing device **120** can operate to autonomously drive the vehicle **110** and/or generate audible and/or visual alerts within the vehicle. The computing device **120** can do so using a machine learning architecture on images or video captured by the camera **125.** For example, the camera **125** can generate a plurality of images (e.g., a sequence of images or images of a video) depicting the environment surrounding the vehicle **110** and/or within the vehicle **110.** The camera **125** can capture the individual images of a sequence of images at a defined interval or pseudo-randomly. The camera **125** can transmit or send the images to the computing device **120** responsive to capturing the images and/or in a batch at defined time intervals. The camera **125** can attach timestamps to the individual images as metadata indicating the times in which the camera **125** captured the images and/or the times in which the camera **125** transmitted or sent the images to the computing device **120.** Any number of cameras of the vehicle **110** similar to the camera **125** can transmit such images to the computing device **120** over time as the vehicle **110** is driving or is at rest.

The computing device **120** can receive the images from the camera **125** and process the images to detect objects that are depicted in the images. For example, the neural network **140** can be a neural network that is configured to use image processing techniques (e.g., as a convolutional neural network) to detect objects in individual images when using the individual images as input. The neural network **140** can detect the objects in respective bounding boxes. The neural network **140** can additionally or instead determine a type of the detected objects, in some cases. The computing device **120** can execute the neural network **140** using the sequence of images received from the camera **125** as input. The computing device **120** can execute the neural network **140** using each image of the sequence of images as input at once or separately execute the neural network **140** for each image of the sequence of images. The neural network **140** can output identifications of objects the neural network **140** detects from the sequence of images, in some cases, with identifications of the respective images, locations of the objects within the images, sizes of the objects, orientations of the objects, types of the detected objects, and/or any other data regarding the objects. In some cases, the computing device **120** can use another type of machine learning model for such image processing and/or object detection.

The computing device **120** can execute the application **150** to process the identifications of the detected objects and/or any other data regarding the detected objects output by the neural network **140.** For example, the neural network **140** can output bounding boxes of objects detected in each image of the sequence of images. The application **150** can process the bounding boxes to convert the bounding boxes into a text-based format. In one example, the application **150** can do so by generating a text paragraph or set of text that includes an identification of the type of each object (e.g., car, pedestrian, tree, sidewalk, etc.), a position of the object (e.g., in an (x,y) axis, a size of the object (e.g., width, height), an orientation of the object, etc. The application **150** can do so by identifying the metadata regarding the different objects output by the neural network **140** and converting the metadata into the text format. In another example, the application **150** can convert the objects into an ASCII format in which the objects are depicted in images in ASCII characters. Converting the objects into the ASCII format can enable the LLM **145** to make more accurate predictions than text descriptions of the objects, in some cases. In another example, the application 150 can convert the objects in the text-based format into tokens that the LLM **145** is configured to read or process. The application **150** can convert the objects using a look-up table that maps text-based objects to tokens. In another example, the neural network **140** can directly tokenize the content of each image of the sequence of images. Converting the images into tokens can enable the LLM **145** to make predictions that may take into account more visual information than a corresponding text description of objects.

The computing device **120** can execute the LLM **145** to generate tokens that represent the future state of the objects (e.g., text-based objects, or a tokenized representation of the objects in a future image) depicted in the sequence of images. For example, the computing device **120** can input the objects in the text-based format for the individual images or otherwise generate tokens from the images into the LLM **145.** The computing device **120** can input the objects in the text-based format or tokens representing the objects and/or images in an order that coincides or corresponds to the sequence of images. For instance, the computing device **120** can (e.g., using the application **150**) generate a feature vector that includes a list of objects (e.g., and any corresponding data of the list of objects, such as the size, orientation, position, etc.) or one or more tokens of the first image of the sequence of images first, followed by the second image of the sequence of images, and so forth. The computing device **120** can execute the LLM **145** based on the input to cause the LLM **145** to generate a plurality of tokens. The plurality of tokens can be or include text descriptors or representations of the objects in an image (e.g., a predicted state of the objects in the future) and/or of the environment surrounding or within a vehicle. In some cases, the representations can correspond to text descriptors of the objects and/or the environment in a table that the application **150** can use to generate text to output to a client device. The objects and/or the environment can be in a future state (e.g., a state indicating a position within the image, an orientation, a size, etc.) at a set time after the last image of the sequence of images (e.g., five seconds after the last image of the sequence of images).

The computing device **120** can execute the application **150** to determine whether to generate an alert and/or to determine or generate an autonomous driving decision based on the future state of the objects and/or the environment (e.g., in the image). For example, the application **150** can analyze the plurality of tokens of the future state of the objects depicted in the sequence of images using one or more rules or a machine learning model (e.g., a neural network, a support vector machine, a random forest, etc.). When using a rule-based approach, the application **150** can compare the plurality of tokens alone or with the detected objects or the tokens of the sequence of images to determine whether to generate an alert or make an autonomous driving decision. For example, the application **150** can determine a vehicle in front of the vehicle **110** will be within a threshold distance of the vehicle **110** in the image two seconds into the future based on the plurality of tokens satisfying a rule configured to be satisfied if tokens indicate a vehicle is within a threshold distance of the vehicle **110.** As applied to generating an autonomous driving decision, the application **150** can determine to automatically slow the vehicle **110** down or change lanes responsive to determining the vehicle in front of the vehicle **110** is within a threshold distance of the vehicle **110** in the image of the future state of the objects in the environment surrounding the vehicle **110.** When using a machine learning model, the application **150** can execute the machine learning model using the plurality of tokens alone as input or using the plurality of tokens in combination with the objects detected and/or converted into text-based objects from the sequence of images as input. The application **150** can execute the machine learning model and generate an alert or an autonomous driving decision (e.g., similar to the alert or autonomous driving decisions described with reference to the rules-based engine) based on the execution. Accordingly, the application **150** can generate alerts and/or autonomous driving decisions based on multiple images and/or a predicted image for improved alert generation and/or self-driving decision-making.

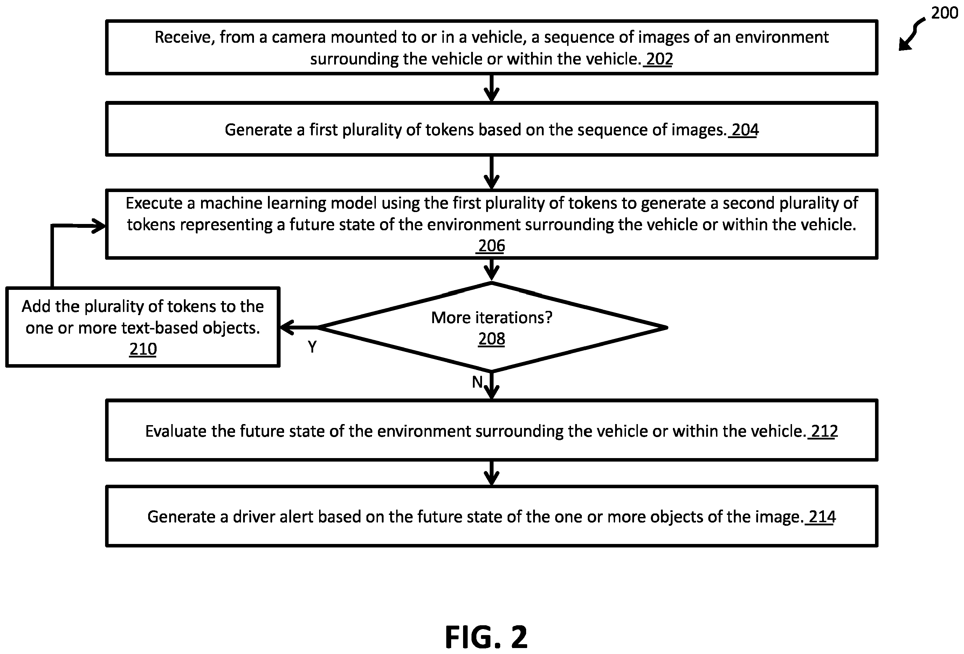

**FIG. 2** illustrates a flow of a method **200** for implementing a generative driving model executed by a data processing system. The data processing system can be or include a computing system of a vehicle (e.g., the generative driving model system **105)** and/or a remote computing system (e.g., a cloud server or the cloud computing system **115**) for using a generative artificial intelligence model for alert generation and/or self-driving decision-making, in accordance with an embodiment. The method **200** is shown to include steps **202-214.** However, other embodiments may include additional or alternative steps, or may omit one or more steps altogether. Different steps can be performed by different computing systems (e.g., the computing system of the vehicle can perform one or more of the steps **202-214** and/or the remote computing system can perform one or more of the steps **202-214)** and/or the different computing systems and can operate together to perform individual steps of the steps **202-214.**

In step **202,** the data processing system receives one or more images. The one or more images can be or include a sequence of images or images of a video (e.g., video data) of an environment surrounding a vehicle or the environment within the vehicle. The sequence of images can be consecutively captured images by the same camera. The images of the sequence can be captured at a set time interval (e.g., every five seconds) or pseudo-randomly. The images can be images of a road on which the vehicle is driving or of areas adjacent to the road. The data processing system can receive the images from a camera mounted to or within the vehicle (e.g., mounted on the dashboard of the vehicle). The images can be or include a JPEG, RAW, or another image file type. The visual data can be or include one or more standalone images or one or more frames of a video. The data processing system can receive the images as a driver is driving the vehicle, when the driver has parked the vehicle, and/or when the vehicle is in a standby mode. The data processing system can receive such images at defined intervals in the case of static standalone images or as the camera streams a video to the data processing system in individual frames.

In step **204,** the data processing system generates a first plurality of tokens. The data processing system can generate the first plurality of tokens based on the sequence of images. For example, the data processing system can generate the first plurality of tokens using a neural network. The data processing system can execute the neural network using the sequence of images as input. The data processing system can execute the neural network using the sequence of images to output or detect one or more objects or features that are depicted in the sequence of images. In doing so, the data processing system can execute the neural network using individual images of the sequence of images for each execution or the entire sequence or a defined number of images of the sequence at once. For each execution, the neural network can output identifications of objects (e.g., pedestrians, animals, cyclists, other vehicles, the sidewalk, trees, etc.) that are depicted in the images with data regarding the objects or one or more tokens representing one or more states of the objects within the environment surrounding the vehicle or the environment itself for each image of the sequence of images. The data can include the location of the objects (e.g., the location or position of the objects within the respective images and/or relative to the vehicle), the orientation of the objects, the size of the objects, etc., within the respective images, for example. The neural network can determine the locations, speeds, or orientations of objects relative to the vehicle based on an identification of the camera that captured the images and/or the data processing system can determine such data using a set of rules based on the camera that captured the images. Such data can provide context regarding how objects depicted in images correspond with the location or position of the vehicle. The data processing system can label the identifications of the objects with the corresponding data for the objects with an identification of the images from which the data processing system detected the objects. In some cases, the data processing system can also label the objects with an identification of the camera that captured the images in which the objects are depicted. The data processing system can use any type of machine learning model to detect objects in images or sequences of images.

For example, the data processing system can receive a sequence of images from a camera facing in front of the vehicle. The sequence of images can include a vehicle directly in front of the vehicle, a vehicle in a lane to the right of the vehicle, and an open lane to the left of the vehicle. The sequence of images can capture or depict the two vehicles over time at set time-steps (e.g., every two seconds). The data processing system can execute the neural network using the sequence of images as input to detect the vehicles and/or the open lane as detected objects as well as data regarding the vehicles and the lane. In another example, the data processing system can receive a sequence of images of a driver of the vehicle looking at his or her phone. The data processing system can execute the neural network using the sequence of images to detect the driver, characteristics about the driver (e.g., looking at an object), and an identification of the object as a phone.

The data processing system can convert the detected objects into text-based objects. The data processing system can convert the detected objects into text-based objects in a text-based format. For example, the data processing system can convert the objects into descriptive or paragraph form. To do so, the data processing system can identify the objects (e.g., the bounding boxes) detected by the neural network in the individual images of the sequence of images and any data about the objects (e.g., data output by the neural network and/or data identified by the data processing system using other techniques). The data regarding the objects can include, for example, a size, an orientation, a position within an image, etc., for each of the objects detected for each image of the sequence of images. The data processing system can generate a sentence or paragraph that includes text or a string with identifications of the objects and/or data about the respective objects. For example, a detected car might be represented as "car: position (x, y), size (width, height), speed, direction," while a pedestrian could be represented as "pedestrian: position (x, y), size (width, height), walking direction." The data processing system can convert objects into text-based objects using any type of data.

In another example, the data processing system can convert the detected objects into an ASCII format, such as into ASCII art. The data processing system may do so, for example, by identifying the objects detected from each image of the sequence of images as well as information about the objects (e.g., the position, size, orientation, and/or type of each detected object). The data processing system can extract (e.g., using the neural network or another machine learning model) the regions of the images containing the respective objects. The data processing system can resize and convert the regions containing the objects to a defined or predetermined size (e.g., a fixed width and height) and convert the regions to grayscale. Converting the regions to grayscale can simplify the image to a single channel, making it easier to map pixel intensities to ASCII characters. The data processing system can map pixel intensities of the respective regions to ASCII characters. For example, the data processing system can map darker pixels to characters with higher visual density (e.g., '#' or '@') and lighter pixels to characters with lower visual density (e.g., '.' or ' '). The data processing system can replace the pixels in the resized and grayscale image or regions to the corresponding mapped ASCII characters. The data processing system can concatenate the ASCII characters row by row to create the ASCII representations of the objects in the images. The data processing system can arrange the ASCII representations of the detected objects within a larger ASCII grid to create a visual representation of the individual images of the sequence of images. The data processing system can position each object's ASCII art representation according to its coordinates in the original images. In doing so, the data processing system can recreate the images of the sequence of images or otherwise represent the images in an ASCII art format. The data processing system can convert the objects into text-based objects in a text-based format in any manner. Such textual representations can provide a standardized way to describe objects detected in the environment around the vehicle, making it easier to process and analyze the images using machine learning models.

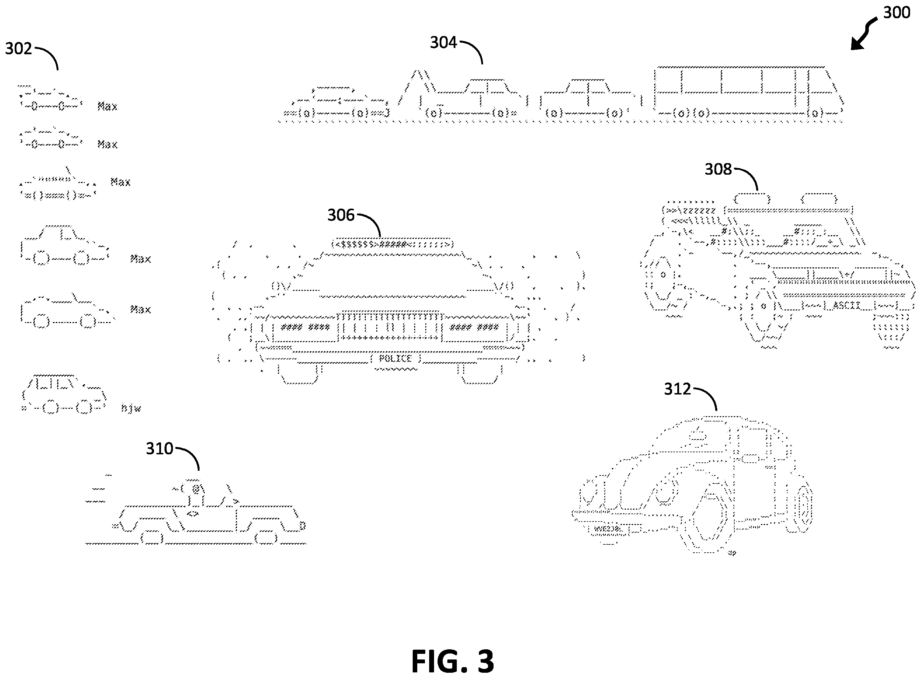

In one example, **FIG. 3** depicts example ASCII art representations **300** that the data processing system may generate based on detected objects from individual images of a sequence of images. The ASCII art representations **300** can include different versions of sedans **302,** a traffic jam **304** including a variety of different types of vehicles, a police car **306,** a four-wheeler **308,** a race car **310,** and a beetle-shaped vehicle **312.** The data processing system may separately generate text-based objects in forms similar to or the same as the representations **300** and combine the text-based objects (e.g., combine to recreate each image of the sequence of images or otherwise combine based on the locations of the objects positioning within the images) to generate a feature vector that can be used to as input into a machine learning model (e.g., a machine learning language processing model) for further processing.

In another example, the data processing system can use the neural network to directly convert the sequence of images to tokens without detecting objects in the images. The tokens can be for the respective images as a whole and/or for individual objects and/or features of the images. For example, the data processing system can execute the neural network using the sequence of images as input. In doing so, the neural network can output one or more tokens representing each image of the sequence of images and/or objects or features within the image. Together, the output tokens for the sequence of images can be the first plurality of tokens that represent the current state of the environment surrounding and/or within the vehicle and/or the objects within such an environment during the capture of each of image of the sequence of images.

In another example, the data processing system can convert objects from images into tokens using a look-up table. For example, the data processing system can execute a neural network or other object detection machine learning model to detect objects in images. The data processing system can convert the detected objects into text-based objects. The data processing system can then convert the text-based objects into tokens using a look-up table (e.g., a fixed look-up table or a learned look-up table) that maps the text-based objects to specific values or words. The mapped values or words can be tokens that represent the objects within the images.

Referring again to **FIG. 2****,** in step **206,** the data processing system executes a machine learning model. The machine learning model can be a machine learning language processing model, such as a large language model or a neural network that may be or include a transformer model. The data processing system can execute the machine learning model using (e.g., as input) the first plurality of tokens (e.g., text-based objects in the text-based format detected from the sequence of images and/or the tokens that were directly generated by another machine learning model based on the sequence of images). In doing so, the data processing system can concatenate the first plurality of tokens into a feature vector and input the feature vector into the machine learning model. Executing the machine learning model can cause the machine learning model to generate a second plurality of tokens. A token can be a word, character, value, or sub-word (e.g., a portion of a word or multiple consecutive or sequential words). The second plurality of tokens can represent, depict, or describe a future state of the environment surrounding and/or within the vehicle. In some cases, the future state of the environment can include the future state of the one or more objects detected from the sequence of images within the environment.

In some cases, the future state can indicate what the environment would look like in a new image. For example, the machine learning model can output a prediction of characteristics of the one or more objects from the sequence of images at a time subsequent to the last image of the sequence of images. In doing so, the machine learning model can output the future state of the objects and/or the environment surrounding and/or within the vehicle a defined time (e.g., a defined time-step) after the last image of the sequence of images. In some cases, the machine learning model can output an image depicting the objects and/or environment in the future state.

For example, the data processing system can receive the sequence of images depicting a vehicle in front of the vehicle housing the data processing system, a vehicle in the lane to the right of the vehicle housing the data processing system, and an open lane to the left of the vehicle housing the data processing system. The data processing system can generate a first plurality of tokens based on the sequence of images. The data processing system can input the first plurality of tokens into the machine learning model and execute the machine learning model. The execution can cause the machine learning model to output a second plurality of tokens indicating updated or predicted locations of the two vehicles relative to the vehicle housing the data processing system. For instance, the vehicle in front of the vehicle housing the data processing system can be closer to the vehicle housing the data processing system than in the last image of the sequence of images. The second plurality of tokens can indicate the change in state of any number of objects as the change in state of the objects would be depicted in an image of the future state of the objects.

The data processing system can input the first plurality of tokens as text-based objects and/or features of the first plurality of tokens into the machine learning model as a feature vector. The feature vector can be a prompt into the machine learning model (e.g., machine learning language processing model). The data processing system can generate the feature vector by combining or concatenating the text-based objects and/or features (e.g., including the available data for the objects depicted in the sequence of images, such as the size, position, and/or orientation of the text-based objects) from the sequence of images into a string or into paragraph form. In doing so, the data processing system can group the text-based objects by the image from which the objects were detected, in some cases. The data processing system can include text-based objects of the most recently captured image first and add the text-based objects of other images in reverse order accordingly or vice versa (e.g., include text-based objects of the most recently captured image last). The data processing system can similarly combine any type of token into the feature vector to use as input into the machine learning model.

In some cases, the data processing system can include other data in the feature vector that is input into the machine learning model. For example, the data processing system can include sensor data regarding the environment surrounding the vehicle in the feature vector. Examples of such sensor data can include an outside air temperature, an amount of moisture in the air, a wind reading and/or direction, etc. The data processing system can additionally or instead include data about the vehicle collected by one or more sensors of the vehicle, such as the tire pressure of the vehicle, the current speed of the vehicle, the acceleration of the vehicle, gyroscopic data of the vehicle, etc., in the feature vector. In some cases, the data processing system can additionally or instead include data regarding the occupants of the vehicle, such as indications of whether the driver is paying attention to the road (which may be determined using machine learning techniques, for example). In doing so, the data processing systems can include data that was collected at the same time or within a defined time period of the times in which the respective images were capture (e.g., based on timestamps of the data or images). Such data can provide the machine learning model with further context regarding changes in the objects depicted in the sequence of images to improve the accuracy of the predicted state of the objects in a new image. The data processing system can generate the feature vector with the sequence of images and/or any data regarding the state of the vehicle or the environment surrounding the vehicle to generate the second plurality of tokens representing the future state of the environment surrounding the vehicle and/or within the vehicle.

In some cases, the data processing system can include an identification of a vehicle type in the feature vector. The vehicle type can be an indication of a type of the vehicle for which the data processing system is generating the feature vector (e.g., the type of vehicle that is housing the data processing system), such as a sedan, a pick-up truck, a truck, etc. The machine learning model may be trained to take into account the type of vehicle when generating a future state of objects in the environment surrounding the vehicle or inside the vehicle because different types of vehicles may have different turn radiuses or acceleration or breaking capacities. Such differences may impact locations of objects external to the vehicle relative to the vehicle over a defined time period. The data processing system may be configured to input the identification of the type of vehicle into the feature vector to use as input into the machine learning model for execution.

In some cases, the data processing system can include an identification of a driver type in the feature vector. The driver type can be an indication of a type of the driver driving the vehicle for which the data processing system is generating the feature vector. The type of driver can be, for example, an aggressive driver, a slow driver, a fast driver, a careful driver, etc. Each type can correspond to a different identification. The machine learning model may be trained to take into account the type of driver driving the vehicle when generating a future state of objects in the environment surrounding the vehicle or inside the vehicle because different types of drivers may navigate obstacles or situations differently that may impact the locations of external objects relative to the vehicle over time. The data processing system may be configured to input the identification of the type of driver into the feature vector to use as input into the machine learning model for execution.

In some cases, the data processing system can train the machine learning model to generate future states of objects and/or environments in real time. The data processing system can do so to customize the machine learning model to the driver of the vehicle and/or the vehicle itself. For example, the data processing system can feed text-based objects or tokens representing such objects generated from a sequence of images into the machine learning model to generate a future state of the objects. The data processing system can capture another image (e.g., a label image) at the time for which the machine learning model is configured to generate a future state of objects relative to the final image in the sequence of images. The data processing system can generate text-based objects from the captured image and compare the generated text-based objects to the future state of the objects generated by the machine learning model. The data processing system can repeat this process over time (e.g., at set intervals or pseudo-randomly) to customize the machine learning model to predict future states of objects for the vehicle and/or driver. In doing so, the data processing system can reduce or remove the need for using the identifications of the type of driver of the driver or the type of vehicle of the vehicle text-based objects in the feature vector.

In step **208,** the data processing system can determine whether to repeat the execution of the machine learning model. The data processing system can determine whether to repeat the execution based on a number of instances or iterations in which the data processing system has executed the machine learning model to generate tokens of future states or predicted states based on the sequence of images (e.g., the same sequence of images). To do so, the data processing system can maintain a counter for a sequence of images. The data processing system can increment the counter for each execution of the machine learning model for the sequence of images. The data processing system can compare the count of the counter with a threshold or a defined value for each increment. The data processing system can repeat this process until determining the count of the counter is at least or exceeds the defined value or threshold.

For example, responsive to determining the count of the counter is not at least equal to the defined value or threshold, in step **210,** the data processing system adds the second plurality of tokens representing the future state of the objects in the image to the first plurality of tokens generated from the sequence of images (e.g., the tokens or text-based objects of each image of the sequence of images or a defined number of the sequence of images). The data processing system can add the second plurality of tokens to a feature vector containing the first plurality of tokens. In step **206,** the data processing system can execute the machine learning model with the feature vector containing the first and second plurality of tokens. The execution can cause the machine learning model to generate a third plurality of tokens representing a second future state of the objects and/or the environment surrounding the vehicle or within the vehicle. The second future state can be the state of the objects and/or the environment a defined time after the time of the initial future state of the objects and/or the environment generated by the machine learning model. The data processing system can increment the counter for the sequence of images responsive to performing the execution.

After executing the machine learning model to generate the third plurality of tokens, the data processing system can repeat the step **208** and determine whether the counter is at least equal to or exceeds the defined value or the threshold. Responsive to determining the count of the counter is not at least equal to the defined value or the threshold, the data processing system can return to the step **210** and add the third plurality of tokens to the first and second plurality of tokens generated from or for the sequence of images. In doing so, the data processing system can generate a feature vector including all of the tokens generated for each image of the sequence of images or tokens generated for a defined number of images of the sequence of images.

In some cases, the data processing system can generate a feature vector with tokens of one less image of the sequence of images compared with the feature vector of the previous execution. For example, the sequence of images can include four images, image A, image B, image C, and image D, which may have been captured in that order. For the first execution of the machine learning model, the data processing system can include tokens generated for objects and/or features depicted in each of image A, image B, image C, and image D in the feature vector to generate a second plurality of tokens. The data processing system can generate a feature vector with the second plurality of tokens and the first plurality of tokens generated from each of image A, image B, image C, and image D or the second plurality of tokens and tokens of a defined number of the images, which may be selected by order of capture. For instance, the data processing system can generate a feature vector from the second plurality of tokens and tokens generated from image B, image C, and image D, leaving out tokens generated from image A because, for example, image A was the first image to be captured of the sequence. The data processing system can execute the machine learning model using the feature vector as input to generate a third plurality of tokens indicating a second future state of the and/or environment of the sequence of images. The data processing system can repeat step **210** by adding the third plurality of tokens to a feature vector including the initially generated second plurality of tokens and tokens from each of image A, image B, image C, and image D or tokens generated from a defined number of the respective images, such as only image C and image D, leaving out tokens generated from images A and B because, for example, image A and B were the first images to be captured of the sequence. The data processing system may do so because the machine learning model may only be configured to process data of a defined number of images (e.g., four in the example above) or to avoid data that is too far in the past to avoid biasing a new future state of the objects in the images. The data processing system can repeat steps **206-210,** in some cases leaving out tokens of more captured images with each iteration, incrementing the counter for each iteration until determining the counter has a count that is at least equal to the defined value or threshold. In some cases, the data processing system can repeat steps **206-210** until determining the data processing system would generate a feature vector without tokens generated based on any of the initial images of the sequence of images.

In step **212,** the data processing system evaluates the future state of the environment surrounding or within the vehicle. The data processing system can evaluate the future state of the environment by applying one or more rules or a machine learning model to the future state of the environment and/or objects within the environment. For example, the second plurality of tokens can indicate the future state of the environment and/or can correspond to or indicate (e.g., in a look-up table or a text description) information about one or more objects depicted in the sequence of images as the one or more objects would be depicted in an image of the environment of the objects at a future point in time (e.g., 20 seconds after the time in which the last image of the sequence of images was captured). The information can include information about the objects such as the positions of the objects, the orientations of the objects, the sizes of the objects, etc. The data processing system can compare the information to a set of criteria. The set of criteria can include one or more criteria such as templates, thresholds, defined values, etc. that can be satisfied by the future state of the one or more objects. For example, the data processing system can determine a criterion of the set of criteria is satisfied if a vehicle object (e.g., an object representing a vehicle of a vehicle type) is within a defined distance of the vehicle housing the data processing system, has at least a threshold size, and/or has an orientation facing the vehicle. The set of criteria can include any number of criteria or rules for any type of data of the future state of the objects.

In some cases, the data processing system can apply a machine learning model (e.g., a support vector machine, a random forest, a neural network, etc.) to the second plurality of tokens and/or future state of the environment. For example, the data processing system can store a machine learning model (e.g., an image evaluation machine learning model) that is configured to process future states of environments and/or tokens representing the future states of environments to generate alerts and/or generate self-driving decisions. The data processing system can input the second plurality of tokens as a feature vector into the image evaluation machine learning model and execute the image evaluation machine learning model. Based on the execution, the image evaluation machine learning model can indicate to generate an alert (e.g., audible and/or visual alert) or a self-driving decision (e.g., a speed adjustment, a turn, a switching of lanes, etc.).

In some cases, the data processing system may apply the set of criteria and/or the image evaluation machine learning model to all or a defined portion of the sequence of images with the second plurality of tokens or the future state or future states predicted by the machine learning model (e.g., the machine learning language processing model). In doing so, the data processing system can apply the set of criteria and/or the image evaluation machine learning model only to the last future state generated by the machine learning language processing model (e.g., the second plurality of tokens) and the sequence of images based on which the last future state was generated, only the future states that the machine learning language processing model generated (e.g., each plurality of tokens that the machine learning language processing model generated for each execution), and/or each or a defined number or portion of the future states generated by the machine learning language processing model and each or a defined portion or number of the sequence of images. For example, the data processing system can apply criteria (e.g., rules) or the image evaluation machine learning model to the sequence of images as well as the second plurality of tokens and/or each plurality of tokens representing different future states and/or corresponding to information of different future states that is generated. An example of such a criterion may be determining an acceleration of oncoming traffic based on changes in position of one or more objects between the images and/or future state or future states of the one or more objects exceeds a threshold or is at least a defined value. In some cases, the data processing system can similarly apply the image evaluation machine learning model to the text-based objects and/or the future states of the objects or the environment to generate alerts and/or self-driving decisions.

In step **214,** the data processing system generates a driver alert. The driver alert can be an audible alert that the data processing system generates through a speaker within the vehicle and/or a visual alert that the data processing system generates by activating a light within the vehicle, for example. The data processing system can generate the driver alert based on the output of the image evaluation machine learning model or a criterion that is satisfied in step **212.** For example, the individual criteria of the set of criteria can each correspond to an alert. For instance, the data processing system can determine a criterion of the set criteria is satisfied based on a size of a vehicle or object exceeding a threshold. The criterion can indicate the vehicle is too close. Responsive to the determination, the data processing system can activate a light within the vehicle or generate an audible alert. The alert can indicate to the driver to slow down or move out of the way of the vehicle. In some cases, the data processing system can update a user interface displayed on a display device of the vehicle to indicate the alert, the type of the alert, and/or the criteria that was satisfied that caused the alert to be generated. In doing so, the data processing system can make the driver more aware of safety hazards or other reasons to adjust operation of the vehicle.

In another example, the data processing system can generate an alert based on activity within the vehicle. For example, the data processing system can perform the steps **202-214** with a sequence of images depicting a driver driving a vehicle. The sequence of images can depict the driver looking at his or her phone. The data processing system can determine the sequence of images with a future state of the objects in the sequence of images satisfy a criterion responsive to determining the individual looked at his or her phone for at least a threshold duration without looking at the road while driving. Responsive to the determination of the satisfied criteria, the data processing system can generate an alert.

In another example, the data processing system can generate the alert responsive to an indication to generate an alert output by the image evaluation machine learning model configured to evaluate future states of objects for alert generation. For example, the output of the image evaluation machine learning model can indicate to generate an audible or visual alert. The data processing system can operate according to the output of the image evaluation machine learning model and generate the alert.

The data processing system can generate instructions to control the vehicle based on the driver alert or based on the future state of the objects of the sequence of images. For example, different criteria can correspond to different control operations for the vehicle, and the data processing system can generate instructions to operate the vehicle according to the criteria that is satisfied. For instance, the data processing system can determine a criterion is satisfied based on one or more future states of objects and/or text-based objects of a sequence of images that indicate to slow down the vehicle. The data processing system can identify the satisfied criterion and generate instructions to slow down the vehicle accordingly. In another example, the driver alert can cause the data processing system to adjust operation of the vehicle based on a location of an object in the image indicated by the future state of the object (e.g., the data processing system can slow the vehicle down or cause the vehicle to change lanes based on a location of the object relative to the vehicle). In another example, the driver alert can cause the data processing system to adjust a velocity of the vehicle based on a proximity of an object in the image to the vehicle indicated by the future state of the object. In another example, the image evaluation machine learning model can be configured to output control operations for the vehicle based on one or more future states of objects and/or text-based objects of a sequence of images. The data processing system can execute the image evaluation machine learning model based on the one or more future states of objects and/or text-based objects of the sequence of images to cause the image evaluation machine learning model to generate a control operation that the data processing system can use to control the vehicle. The data processing system can operate to control the vehicle based on the generated instructions or transmit the instructions to a controller of the vehicle that the controller can use to control the vehicle.

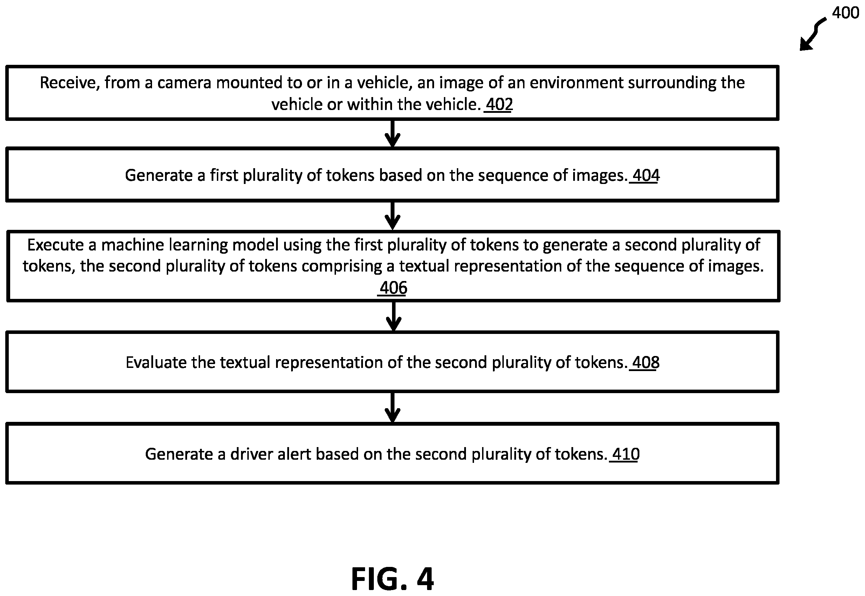

**FIG.** 4 illustrates a flow of a method **400** executed by a data processing system. The data processing system can be or include a computing system of a vehicle (e.g., the generative driving model system **105)** and/or a remote computing system (e.g., a cloud server or the cloud computing system **115**) for using a generative artificial intelligence model for alert generation and/or self-driving decision-making, in accordance with an embodiment. The method **400** is shown to include steps **402-410.** However, other embodiments may include additional or alternative steps, or may omit one or more steps altogether. Different steps can be performed by different computing systems (e.g., the computing system of the vehicle can perform one or more of the steps **402-410** and/or the remote computing system can perform one or more of the steps **402-412)** and/or the different computing systems and can operate together to perform individual steps of the steps **402-410.**

In step **402,** the data processing system receives an image. The image can be or include an image of an environment surrounding the vehicle or within the vehicle. The data processing system can receive the image from a camera mounted to or in a vehicle. In step **404,** the data processing system generates a first plurality of tokens based on the sequence of images. The data processing system can generate a first plurality of tokens using a neural network and/or by detecting one or more objects in the environment surrounding or in the vehicle as depicted in the image. The data processing system may perform steps **402** and **404** while performing corresponding steps **202-204** or in the same manner as described above with respect to steps **202-204.**

In step **406,** the data processing system executes a machine learning model. The machine learning model can be a machine learning language processing model (e.g., a large language model or a neural network that may be or include a transformer model). The data processing system can execute the machine learning model using (e.g., as input) the first plurality of tokens (e.g., one or more text-based objects in the text-based format or tokenized representations of the objects or the environment surrounding the vehicle). Doing so can cause the machine learning model to generate a second plurality of tokens. The second plurality of tokens can be or include a textual representation of the one or more objects in the sequence of images and/or the environment in the sequence of images. For example, the first plurality of tokens generated from the sequence of images may include factual data or depictions of the objects as they are depicted in the image. The data processing system can use the machine learning model to generate a description of the sequence of images based on the text-based objects. The description can include one or more tokens describing the image. The description can include an analysis of the image such as "there are multiple vehicles in front of or too close to our vehicle." The analysis can include factual data about the objects in the image together or relative to each other.

In step **408,** the data processing system evaluates the textual representation of the second plurality of tokens. The data processing system can do so by applying a set of criteria or a machine learning model to the textual representation (e.g., the factual data) of the one or more objects in the image of the second plurality of tokens. The data processing system can do so in the same or a similar manner to the manner described with reference to step 212. For example, the data processing system can determine whether any of the factual data generated by the machine learning model satisfy a criterion that corresponds to generating an alert or generating a self-driving instruction. An example of such a criterion may be to slow down or generate an alert because there are pedestrians approaching from multiple angles in front of the vehicle. In another example, the data processing system may execute another machine learning model (e.g., a support vector machine, a neural network, a random forest, etc.) using the textual description as input to cause the machine learning model to generate an output indicating to generate an alert or a self-driving instruction. In step **410** the data processing system generates a driving alert according to any satisfied rules or the output of the machine learning model in the same or a similar manner to the manner described with reference to step **214.**

In some cases, the data processing system can generate a textual summary of a sequence of images. For example, the data processing system can execute a machine learning language processing model using text-based objects in a text-based format depicted in a sequence of images or tokenized representations of the sequence of images or objects or the environment depicted in the sequence of images. The sequence of images may depict a driving event (e.g., an accident, running a redlight, etc.). The machine learning language processing model can output a textual description of the driving event describing different characteristics of the event based on the input text-based objects. The data processing system can apply one or more rules or a machine learning model to the textual summary to determine whether to generate an alert or perform an autonomous driving action (e.g., generate and/or control the vehicle with instructions to perform an autonomous driving action, such as suddenly braking or changing lanes to avoid an obstacle).

In some embodiments, the data processing system may use a machine learning language model (e.g., the same machine learning language model that generated the future state of objects in an image or a different machine learning language processing model) to generate text indicating instructions based on the future state in the predicted image. For example, the data processing system can input the text-based objects, tokens, and/or future state of the objects or the environment in (e.g., depicted in) the predicted image into the machine learning language processing model and execute the machine learning model to generate text that includes instructions for the driver (e.g., "pay attention to the road," "stop looking at your phone," "turn left," "stop," etc.). Other examples of inputs that can be included are identifications of event types, identifications of alert that were generated, a type of alert that was generated, etc. The data processing system can output the text in spoken language through a speaker in the vehicle to the driver such that the driver may follow the instructions for safer driving.

### Generative AI Model Training

The data processing system can train the machine learning model. For example, the data processing system can collect demonstration data and train a machine learning language processing model (e.g., a large language model or a neural network that may be or include a transformer model, or the LLM **145**) using supervised training. The data processing system can sample a prompt (e.g., an input into a machine learning language processing model) from a prompt dataset containing one or more prompts. An example of such a prompt can be "explain reinforcement learning to a 6 year old." A model trainer (e.g., labeler, which can be a human or a component or module of the data processing system) can label the prompt with an expected output of the machine learning language processing model. The data processing system can feed the prompt into the machine learning language processing model and execute the machine learning language processing model to generate an output of one or more tokens (e.g., a textual response). The data processing system can use backpropagation techniques and/or a loss function based on a difference between the label for the prompt and the output of the machine learning language processing model to train or fine tune the weights and/or parameters of the machine learning language processing model. The data processing system can repeat this process with any number of training datasets, such as until determining the machine learning language processing model is accurate to a threshold.

The data processing system can collect comparison data and trains a reward model. For example, the data processing system can repeat this process using the same prompt to cause the machine learning language processing model to generate different outputs (e.g., different textual responses based on the same prompt). The model trainer can evaluate the outputs and rank the outputs in order from best to worse (e.g., by assigning rankings to the different outputs). The data processing system can train a reward model using the rankings of the outputs.

The data processing system can train the machine learning language processing model (e.g., after fine tuning the machine learning language processing model) using the reward model. For example, the data processing system can sample a different prompt from the prompt dataset. An example of such a prompt can be "write a story about otters." The data processing system can feed the prompt into the machine learning language processing model and execute the machine learning language processing model to generate an output of one or more tokens (e.g., a textual response) based on the prompt. The data processing system can use the reward model based on the prompt and the output to generate a reward for the output. The data processing system can update the weights and/or parameters of the data processing system based on the reward generated by the reward model. The data processing system can repeat this step any number of times to further train the data processing system, increasing the accuracy of outputs generated by the machine learning language processing model.

### Generative AI Dashcam

Certain aspects of the present disclosure generally relate to artificial intelligence (AI) assistants and large language models (LLMs), and more particularly to systems and methods of assisting drivers using a language model.

Recent progress in large language models (LLMs) has contributed to impressive natural language comprehension and generation capabilities in chatbots. Generative Pre-trained Transformer 3 (GPT-3), a conversational chatbot introduced by OPENAI in late 2022, marked a significant advancement in artificial intelligence (AI) generally, and in LLMs in particular. GPT-3 is based on a sequence-to-sequence (seq2seq) model with an attention mechanism, which is a type of deep learning model that is common in LLMs. ChatGPT captured the attention of users worldwide with its detailed and articulate answers across many knowledge domains.

Known limitations of existing LLMs, including ChatGPT, include a propensity to write plausible but incorrect answers to questions, biased answers, or inappropriately confident answers. Biased answers may reflect imbalances in training data and/or underlying biases in the training data itself. Inappropriately confident answers may be attributable to several factors.

At present there are no known applications of LLMs in the context of driving, driver assistance, driver coaching to impact unsafe driver habits, and the like. Certain aspects are directed to overcoming challenges and limitations of existing LLMs so that they may be used effectively in driving applications.

Certain aspects of the present disclosure generally relate to providing, implementing, and using a large language model to assist drivers. The AI assistant for drivers ("driver assistant") may feature a language model and other related chatbot functionality, such as may be incorporated into a conversational chatbot, or such as may make use of one or more components of a conversational chatbot.

Certain aspects of the present disclosure generally relate to techniques for framing a question or describing a scenario so that an LLM may generate a more helpful response. In the context of describing a driving scenario, for example, appropriately selecting a time interval corresponding to a traffic event and/or organizing a prompt to focus on at least one key moment in the video sequence may be examples of techniques for beneficially describing a scenario.

Certain aspects generally relate to fine-tuning an LLM to produce descriptions of events that correspond to previously generated and reviewed human labels. The previously generated and reviewed human labels may be based on a high-level description of the traffic event.

Certain aspects generally relate to training an LLM to generate a high-level description of traffic events based on low-level features. The low-level features may correspond to visual object detections in at least two frames, such as where an object is not detected in a first frame and is detected in a second frame, such that the two object may be determined to have appeared at a point in time between the times that the first frame and second frame were captured. Likewise, detecting an object in a first frame by not in a second frame may be the basis of a high-level description of the traffic event that the object was passed or crossed by a vehicle having the image capture device.

Certain aspects of the present disclosure generally relate to training a LLM to be an effective driving safety coach.

Certain aspects of the present disclosure generally relate to interacting with an LLM after applying privacy-enhancing modifications to a prompt, so that personalized responses may be obtained without leaking personal data to the LLM.

### Conversion of visual data into a natural language summary

Certain aspects of the driver assistant are directed to representing driving event data, which may include video and other data that is captured by a vehicle mounted camera system ("dashcam"), in a format that can be used as input into a language model. In some embodiments, visual data of road scenes may be converted into one or more textual representations.

Alternatively, or in addition, images may be selected from video data and may be annotated with text and/or other visual objects, such as a bounding box to indicate a location of a visual object or other feature of interest in the scene.

In some scenarios, driving event data may be represented as a series of symbols, such as natural language text, in one example. The method includes generating a listing of locations of visually detected objects that are relevant to driving, such as cars, trucks, traffic signs, traffic control devices, and the like, that may be detected based on processing of video data by a neural network that has been trained to detect and locate such objects in visual images. The method may further include generating textual representations based on the listing of locations of visually detected objects across multiple image frames that were captured sequentially. The method may further include summarizing the textual representations associated with a sequence of captured frames to produce a summary representation of a driving event. In this way, a series of single images may be translated to a textual representation of a driving event. Certain aspects of the present disclosure explain how summarization can be applied to a series of images captured from a beneficially selected time window, or centered or otherwise anchored to a relevant driving event, as described below.

In some embodiments, summarization of driving events may be triggered by an event trigger, such as the crossing of a traffic light, a traffic sign, an informational sign, and the like. Likewise, summarization may be triggered by an inertial trigger, such as a hard-braking event. The summarization may be triggered by a location-based trigger, such as arrival at a destination, proximity to a highway exit, and the like. The method may optionally include filtering the representation to focus on detected objects (or a subset of detected object based on object classifications), trajectories of objects (or a subset), and/or interactions between objects that may be salient in the scene and/or that are relevant to how a driving scenario may be classified.

The span of time to be considered may be determined in multiple ways. In one example, the span of time may be based on a pre-determined time window, such as 12 seconds or 24 seconds, which may be determined to be adequate for scene comprehension based on previously recorded and summarized data.

Alternatively, or in addition, the span of time to be considered may be determined, in part, based on a visual analogy to a "new line" character, which may correspond to an end of a paragraph in text, and which may correspond to a period of relative stasis in visual imagery. For example, video data collected during typical highway driving may be "punctuated" by entrance ramps, exit ramps, or traffic events, such as another driver indicating an intent to change lanes. In one example, a time span may extend from a fixed time interval prior to another driver changing lanes (or indicating an intent to change lanes), and may extend to five or ten seconds after the completed lane change.

In another example, the span of time to be considered may be based on a first frame in which a traffic control device, such as a stop sign or a "stop ahead" road marking, may be detected in the visual data. The span of time may then extend until soon after the detected traffic control device was crossed by the vehicle from which the image data were captured.

According to the above techniques, outputs of a visual perception neural network may be translated into textual representation of driving events at various levels of detail. In a verbose representation, all detected objects may be described in terms of their position in each image frame. In a more compact representation, certain detected objects may be described at certain instances. The textual representation may also include a representation of data collected from the vehicle by means other than through image processing, such as sensing the vehicle's speed using geolocation data, a speedometer, and/or wheel odometer. For example, the textual summary may include a statement that the vehicle came to a rolling stop at a stop sign.

Certain aspects of the present disclosure are directed to processing driving event data to characterize a driving event. In some embodiments, the output may be hierarchical. The output may describe a type of driving behavior and/or a particular driving scenario, such as a description of the event as comprising the crossing of an intersection having a traffic light, merging onto a highway, turning left across on-coming traffic, passing a stop sign, and the like. The output may further describe a sub-type of the driving scenario. In the traffic light example, the language model may describe the event with reference to the state of the traffic light at the time that the vehicle crossed the traffic light and/or entered the intersection. Further, the language model may describe additional features or attributes, such as a characterization of the safety of the driving event.

### Training a Language Model to be a driving safety coach

Certain aspects of the present disclosure are directed to training a language model to output a description of a driving event. Techniques for training such a language model may include generating ranked labels corresponding to different video records of similar driving events. The ranked labels may be generated by asking human annotators to compare two or more video clips captured by a camera coupled to a vehicle with a question. In one example, the human annotators are asked to rank the driving scenarios from least safe (riskiest) to most safe. In another example, the human annotators are asked a question about their own preferences, such as "which car would you rather be in?"

Certain aspects are directed to training a sequence encoder, such as a front-end of an LLM, to learn to identify different driving events that depict a similar driving scenario. In one example, the training may be based on inputs from human annotators who are shown video data associated with multiple driving events, such as three driving events. The human annotators may be asked to select which of two of the videos is most similar to the third, or generally, which video of a pool of videos depicts a driving event that is most similar to a video recording of a target driving event.

In another example, the training may be based on labels automatically generated by a driver safety perceptual engine, where the driver safety perceptual engine comprises object detectors and logic operations that collectively categorize driving events into a driving scenario type. The driver safety perceptual engine may further sub-classify the driving events. The driver safety perceptual engine may be additionally configured to calculate other metrics that may be considered to bear on the similarity of two driving events, such as a proximity of a vehicle in an adjacent lane, its speed, and its behavior.

A known problem with existing LLMs, including GPT-3 and GPT-4, is that inaccurate descriptions may be produced. Therefore, certain aspects are disclosed to improve the accuracy of LLM descriptions of traffic events. In one example, human text generation may be avoided in a process to fine-tune an LLM. Initially, the LLM must be provided with target textual representations. In some cases, human labelers need not be involved. One aspect of the present disclosure is to use field data rather than human labelers. Field data may refer to event descriptions as event codes with timestamps, which may result from certain logical processing steps of a smart dashcam safety system. For initial training, an event-code based representation may be converted into text on the basis of a lookup table. The text representation may further include event sub-types or other modifying text. The LLM is then trained to match those automatically generated textual representations, with higher weight given to confirmed events.

By training a sequence encoder as described above, the sequence encoder may be trained to enable identification of recorded driving events that are qualitatively and/or quantitatively similar to a given target driving event.

Training an LLM may include representing a driving event using a sequence encoder; and then employing an attention mechanism with a neural network that is trained to detect objects and other features that are relevant to driving on a per-frame basis. Early-fusion may refer to processing detections from individual frames that are then summarized into a textual summary using a large language model. Descriptions of each frame are then summarized by an application of the large language model to the textual summaries. Late-fusion may refer to detections that span multiple frames, such as object tracking of vehicles or signs across frames, and then summarizing the object trajectories into text with the language model. In some embodiments, sequence encoders may be configured to operate at either an individual frame or multiple frame level, and on the basis of training on other tasks (or uses, as described below), the system may learn to summarize traffic events using early-fusion, late-fusion, or some combination.

Training a language model may also involve asking human labelers to explain an error mode of traffic safety event logic. In some embodiments, the human labelers may be asked to identify false positives and may not be asked to provide textual explanations. Alternatively, human labelers may be presented with multiple false positive examples and be asked to explain common features of a given selection of the examples.

### Uses of a natural language summary of vehicular safety events

A natural language summary of a traffic event may be used in several ways to benefit traffic safety. In some embodiments, a summary of a traffic event may be used to generate an alert for a driver, such as a warning that a nearby vehicle appears intent to enter the vehicle's lane. Based on processing of inward camera data, the summary of the traffic event may correspond to detecting driver distraction, drowsiness, failure to wear a seatbelt and the like.

By translating vehicular safety events into a natural language summary, a driving safety system may be able to provide more granular feedback to a driver and thereby better help the driver improve unsafe driving habits. For example, for a driver who is focusing on improving a habitual behavior in a particular driving scenario, a textual summary of a vehicular safety event may be able useful to provide additional feedback in addition to detecting the driving events themselves. For example, whereas a safety system may typically alert the driver to detections of unsafe driving events, a driving safety system enabled with certain aspects of the present disclosure may provide positive encouragement in response to detecting a target driving event in a given scenario.

Likewise, the chatbot may track a driver's progress against safety metrics. Such a chatbot may provide the driver with encouragement in the form of positive reinforcement. Such a chatbot could also focus the driver on aspects of his or her driving on which the driver should focus to improve overall safety. Similarly, the chatbot could provide training and assistance with respect to other metrics, such as fuel efficiency.

Certain aspects of the present disclosure may be directed to summarizing online chat forums. For example, a language model may be configured to summarize chat room message boards in which drivers share tips and tricks for safe driving. The language model, which may have already been fine-tuned to process driving video data, may then identify driving events that depict examples of safe and unsafe driving, based on an internal encoding of a driving scenario that was described in the online chat forum. The language model may be used in this way to provide a driver with personalized feedback based on video data captured by while the driver was driving, where the video data relates to a driving scenario discussed by other drivers in the online chat forum. The language model could also provide a summary of key points from the online chat forum in response to detecting that the driver engaged in an unsafe driving behavior that was the subject of the chat forum.

Certain aspects of the present disclosure are directed to a chatbot that can act like a driver assistant or driver coach. The chatbot may provide the driver with textual explanations of what would have been a safer driving behavior in a given situation. In an embodiment, an LLM describes what specific change the driver should make in the scenario - either with specific examples (should have been ready to stop here), or as an identification of a habit (you do not seem to recognize "stale green" lights. When approaching a traffic light that has been green for several seconds, you should start to slow down so that you can stop in time if the light changes before you cross the intersection).

According to certain aspects, training examples for coaching feedback to be provided by the LLM may taken from safety manager notes provided to the drivers in the context of managed coaching sessions,

Certain aspects are directed to a chatbot that provides real-time driver assistance with a driver drives a vehicle. A chatbot that has been fine-tuned to work with textual representation of video data, or that is in communication with a module capable of translating video data into a language sequence representation, may be able to point out aspects of a scene that the driver might have missed, may be able to read signage that is difficult to read, may translate text in visible signage to a preferred language of the driver, and the like.

### Modifications to LLM architecture

Improvements to driving safety may be enabled by modifications to an LLM architecture. Transformers have context nodes. Context nodes may be activated based on previous text, such as earlier portions of the conversation. As disclosed herein, context nodes may be activated directly based on a vision-based inference of a driving scene. For example, context nodes may correspond to different driving scenarios (traffic light, stop sign, merge zone, highway, residential, etc.). Furthermore, context nodes may correspond to positional information, such as the number of lanes on the present rode and which lane the driver is in, whether the driver is in a left-turn lane, etc. These context modes may be directly activated by neural network inferences.

In addition, the context nodes may be activated based on previous textual representations of the scene that have been presented to the LLM. In this way, the LLM can both benefit from context clues determined visually, but can also act to provide backup to the visual system by retaining a context. An LLM architecture here may be different in the sense that the vision model may have direct access to context nodes of the LLM.

### Training a generative model with driving data

LLMs are trained on a large corpus of text data to predict the next token, which may be a character, a word, or some other unit of text (such as an intermediate unit between a character and word. Through training, the LLM may be creating internal algorithms, upon which certain reasoning abilities appear to emerge. Other capabilities include an ability to summarize, convert text to code, and more.

In some embodiments, these capabilities are not explicitly designed into the LLM or even intended. Rather, the training paradigm may be focused on predicting the next output on a large (e.g., one trillion tokens) database, and these other capabilities emerge.

As disclosed herein, a generative AI can be trained. The generative AI may be smaller than a typical, publicly deployed LLM, and/or may begin as a pretrained LLM, and/or may be a portion of an LLM that performs a token generation function. A corpus of driving data may be used to predict the next driving data step. This training paradigm may be considered a type of "document completer" function, where the system is trained to predict the next token in a sequence, the sequence being a representation of driving data.

In one embodiment, driving data is quantized to a frame rate chunk of time. A frame rate may correspond to a camera capture frame rate, such as 30 fps, or a subsampled rate, such as 5 fps. Sensor data other than camera data, which may be captured at a different frame rate, may be likewise binned into the frame-rate chunk of time. Time stamps may be used.

In some embodiments, a deep learning representation, such as activations of a layer that is deep in the object detection models, may be used as a representation/summary of the image. The model may be trained on a series of data leading up to a given point in time and may be asked to predict one or more of the next sensor data. In some embodiments, the feature layer of the object model may be considered a feature embedding space that is comparable to an embedding space into which text prompts are projected.

In another embodiment, the sensor data may be summarized as to sufficient statistics, and the alerts and detected driving data (lane lines, signs, cars, distances to each, etc.) are summarized in a textual approach. Such a model may be trained to predict one or more of the next step values.

Similarly, other trainings as inspired by LLM training methods can be used but may be based on raw driving data and predicting next driving data. This may be considered a character-level approach to training a generative AI with driving data.

A generative AI trained, in accordance with the present disclosure, with driving data may improve active driver assistance systems (ADAS) and autonomous driving features. One challenge to these uses is the relative size and computational complexity of LLMs. However, according to certain aspects, a generative model may be implemented on an edge computing device. In one embodiment, a model may be modified to fit within the computational and memory constraints of an embedded Internet of Things (IoT) device.

Certain aspects may be applied to coaching summaries, which may be textual data typically provided by a driver safety coach to summarize a coaching session. Such data may be used as targets for prediction of a generative AI model. The generative AI model can also be trained based on the driving alert data to coaching summaries to further create/strengthen the mapping between driving data and language.

Many variations for a coaching summary model by a generative AI are contemplated. Varying time frames of coaching sessions may affect the type of summaries that are produced. Likewise, the amount of data to which the generative AI is exposed, or the distance to the future into which it is tasked with predicting, may be varied to produces qualitatively different effects.

LGMs (large generative models) or GPTs (generative pre-trained transformers) may be configured for "alert reasoning." Alert reasoning may describe reasoning (e.g., explaining) long tail distribution scenarios that have not been encountered before, even in the context of otherwise well-defined driving scenarios. Rare examples of traffic light crossings may be successfully explained or predicted by an LGM/GPT.

In some embodiments, a generative AI may generalize beyond Forward Collision Warning (FCW) as it may be implemented in dashcam safety device. While the FCW may have been initially configured to warn the driver about collisions with a car, bicyclist, or pedestrian, the generative AI may enable an extension of the FCW functionality to different types of objects that may be encountered in a road.

In some certain embodiments, pedestrian intent may be predicted, answering the question, is the person going to cross in front of the vehicle having the enabled dashcam device? Similarly, the generative AI may predict that a vehicle on a cross-street is not likely to stop. Such detections may trigger an ADAS alarm and/or an autonomous driving response.

Similar benefits may be derived from using a generative AI to predict object detection and characterization sequences from inward-camera data. For example, the system may learn to reason about fatigue patterns and may be generalize to other patterns and forms of fatigue, even including variations on which the generative AI was not explicitly trained.

Training an LLM or generative AI using driving data as the inputs in a manner that is analogous to how LLMs are trained may achieve emergent abilities that are analogous to the emergent "reasoning" capabilities of an LLM.

A generative AI may be trained on a textualized representation of driving data summaries. The driving data LLM may be used as an embedding function where distance in the embedding space should map to how similar various driving data histories are.

A driver type may refer to a driving style or collection of driving attributes that are considered similar, and therefore amenable to similar coaching or self-improvements strategies. To train a generative AI to recognize a driver type, the embedding function may be used for similarities of drivers. More generally, other similarity functions beyond LLMs may also be used. The similarity function may be used to map driver histories and to group together similar drivers. Upon grouping drivers in this way, statistics about the group may be computed. Various statistics or KPIs, such as accident rates, fuel efficiency, and so forth may be used. In some embodiments, the driver grouping just described could be a basis for a next generation Greenzone^{®} score, which is a summary driver safety statistic formulated by Netradyne^{®}.

In some embodiments, the language model may be trained to output a description of summary data, which may include, "the driver was in an accident this week" (or month, quarter, etc.). Such outputs may be compared to and trained with generated descriptions of actual driving data, wherein the generated descriptions are programmed to output "the driver was in an accident this week" whenever certain classes of collision or other loss events are detected. Since such events are rare for all drivers, the training may be applied at a group level such that a prediction may instead be of the form of "between 1-3 drivers from group X were in an accident this week." For large enough groups, the predictions of such ranges may be tractable.

A fleet type may refer to characterizations of vehicle fleet businesses, such as long-haul or local delivery. A similarity metric may be used to group/map different fleets or groups within fleets to understand cohorts. The generated data may relate to cohort types at the fleet level.

In some cases, lower level driving data may be used to provide coaching feedback for a driver much faster that could be done if considering single drivers alone. For example, a generative AI trained with driving data may be able to recognize a driver type or fleet type quickly, and accordingly be able to recommend coaching recommendations within hours or a day's worth of drive time, as opposed to months.

If or because the coaching recommendations are built on a large language model / generative AI, the language models may be additionally used to generate coaching recommendations in natural language for how to improve performance. Such a feature may be improved if some of the training data is concerned with digesting driving data that is paired with human-provided coaching summaries.

Similarly, the generative AI / LLM may be used to help draft the coaching feedback that may be presented to a driver. After a coaching session, the generative AI / LLM may summarize the coaching session. Likewise, it may summarize previous driver coaching sessions for the fleet safety manager so that the safety manager may more effectively pick up where they left off.

In some embodiments, the LLM may summarize how a driver has changed a driving habit as a result of a previous coaching sessions. For example, the LLM may generate a text string that explains whether a driver has experienced an improvement in a coached habitual behavior, and if so, whether that improvement has been maintained or has regressed.

Drowsy research shows asking the driver how he or she is feeling provides good drowsy feedback. The computing system can provide statements, instructions, or recommendations to the driver through a speaker, as "You look tired, maybe should pull over and take a break." The computer can also detect driver feedback and respond to statements made by the driver to make it appear as if the computing system is listening. The computing system can also emit voice audio for other alerts. For example, the computing system can emit audio stating "we notice you are following too close" or "we notice you are changing lanes frequently." The driver may respond and initiate a conversation with the computing system to initiate a two-way back and forth with the computing system, which change the ways that drivers perceive the system.

A large language model that has been trained with driving data may be referred to as a large generative model (LGM).

In a first training paradigm, observation data files may be the driver/driving data. The LGM may be trained or an LLM/LGM may be fine-tuned these files to predict the next token. Since observation data files (containing semantic representations, such as bounding boxes, object classes regarding the image data within the bounding box, time steps, raw sensor data and the like), the next time step (target for training) could be the next token in an existing JSON file.

Similarly, the observation data files may be augmented with an appropriate feature vector in numerical text form from the deep learning model and/or with the JPG images in text form to capture the image content.

One challenge with using JSON files is that the observation files may correspond to a pre-defined duration data, such as one minute chunk. Various data fields may be described in the JSON file together, so, for example, IMU data for the minute is continuous then bounding box data, and events such as traffic light crossing or speed limit crossings during the minute are in another section of the file and so forth. With no pre-processing of the JSON (or similar text) file, an LLM attention model may be required to learn about the temporal relations across the file.

According to certain embodiments, it may be preferable to make the data more temporally continuous by reformatting the data. The same data could be represented, just with all the data in the same order for the same time step (e.g., in a CSV for each row and return character to a time stamp to an index and time stamp to start the next row). By keeping the data in the same order, such as GPS data, then IMU data, then BBox data and so forth, such as may be found in a CSV file format, the attention mechanism of the LGM may have a better chance of learning useful relationships between the various data streams. In this way, prediction of the next time step could be again to predict the next token/work/character, or to predict the entire next line (time step).

To make a leap for observation files on the order of minutes to meaningful driver statistics summaries on the order of days or weeks, other innovations may be employed. Instead of, or in addition to, training for predicting the next time step on the low level data, a higher level model data/statistical summary may be created. The LGM may then be trained on these higher-level data/summaries.

Intermediate representations are also contemplated. For the low-level summaries, rather than the data being represented as bounding boxes in the image plane, the driving data may be in a form that correlates with how humans would describe a typical traffic scene. For example, the driving data may include an index, time stamp, distance to closest object in front, distance to lane line on left, distance to lane line on right, number of vehicles, traffic light in view with state and distance, and the like.

Generalizing further, the generative AI may be trained based on alert and event data. For each minute (or second or 10 seconds) training data may be created for a record in a textual manner rather than (or in addition to) a column-based approach of organized field. As a side benefit, the textual manner would avoid inefficiencies with having to represent empty fields for objects that are rarely detected. Examples of this representation level include: drove through a green light, drove 100m, crossed a 25MPH sign, car changed lanes in front at 3 seconds ahead, approaching a green light 200m ahead, changed yellow now 100m ahead, turned red 10m ahead, ran red light, etc.

Further, the generative AI may be trained on detected events. Examples of this representation level include: crossed green light at X, ran red light at Y, followed too close, stopped at stop sign. During training, the generative AI can attempt to predict the next event. The enumerated events could be the vocabulary/tokens. As described above, for rare events, such as collisions, the predicted rare events may be pooled across many drivers of the same type. The system may be judged correct for determining that the driver has a 0.01% chance of being in a collision if approximately 1 driver for every 10,000 in the cohort is actually in a collision when such a prediction is made.

Based on training a generative AI as described above, a general sequence generative AI training may include: low level training on predict the next step to learn and emerge driver behavior; training on the emergent driver behaviors and human generated statements of that driver behavior (either from our coaching records or from statements generated by appropriately skilled labelers.); using human-in-the-loop reinforcement learning.

The training in step 1 may continue at least until the LGM can learn the statistics and algorithms (and have emergent properties) relating to driving behaviors. The goals of steps 2 and 3 are then to connect/align that knowledge to human language and the target applications.

If a generative AI/LLM is essentially applying reasoning to a sequence of tokens, then by training with driving data many opportunities for improving driving safety emerge. Such an approach may be used to train an autonomous driving system, detect driver fatigue, detect drunk driving. Applying reasoning to a tokenized representation of images or image sequences may essentially change the way event detection is performed by ADAS or autonomous driving systems. A generative AI that is used to infer pedestrian intent in a roadway context may also be applied in other contexts.

### Framework for fine tuning a large language model (LLM)

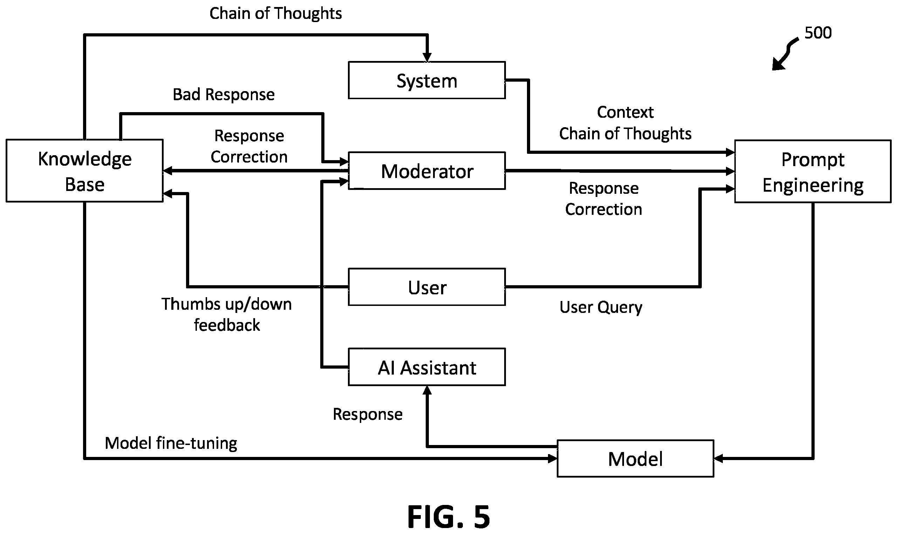

**FIG. 5** depicts a framework for fine tuning an LLM. An artificial intelligence (AI) assistant can be a chatbot that is configured to receive a query from an end user. The query may correspond to information required by the end user from the AI assistant. The query is forwarded to a prompt generation module that combines the query with a context. The context is related to information stored in a database that is relevant to the query. In one embodiment, the context can be a webpage that includes information required to provide a response to the query. In another embodiment, the context can be the end user's driving related data that is retrieved from a database. The end user's driving related data is processed to encode/encrypt information related to driver's identity, thereby providing privacy and security to the end user's identity.

When a query is related to a user's individual driving performance, the context relevant to the query may be identified based at least on the user's identifier and the query. If the context includes driving data of the user retrieved from the database based on the user ID, there may be a privacy risk. To address this risk, the driving data may be processed to encrypt/anonymize any user identifying information prior to sending the context to the prompt generation module. The prompt generation module generates a prompt based on the query and the context. Further, the prompt generation module may receive a correction input from a moderator based on the previous responses generated by the module. In one embodiment, the correction input is included along with query and context to generate a prompt. The prompt is in a data format that can be processed by the LLM.

The LLM model is configured to receive the prompt and output a response based on the prompt. The response is displayed to the user in the AI assistant interface. The user can provide feedback with respect to the response displayed on the device of the user. The user device may be installed with an application that can provide the AI assistant to help the user with respect to multiple queries. The user provides feedback to the responses received from the AI assistant and the feedback is stored along with the response in the database for further training the LLM. The moderator can review the feedback received from the user and can correct the answer by manually entering an answer that should have been provided by the model. The corrected answer may be used to train the model.

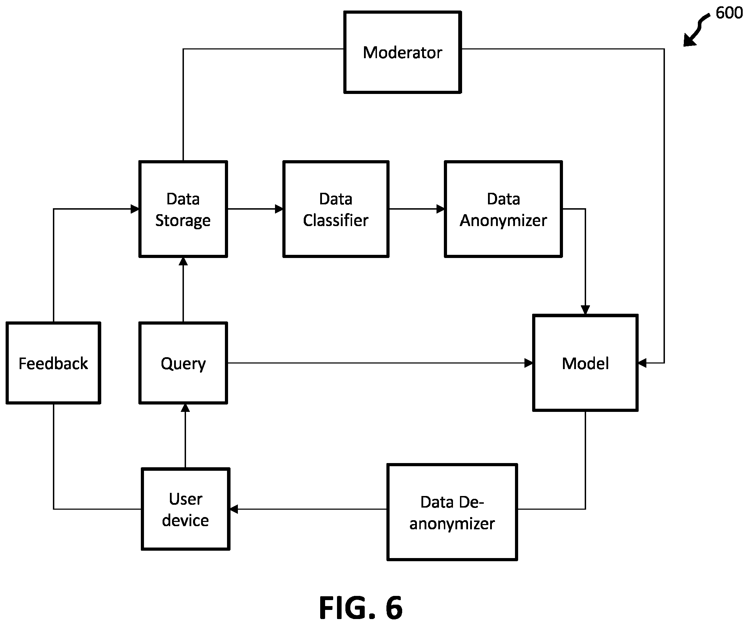

**FIG. 6** depicts a second framework for a chatbot using an LLM. The user enters a query in the chatbot displayed on the user device. The chatbot is part of an application installed on the user device and the application is managed by a service provider. The user is registered with the service provider and receives credentials from the service provider to access the application. In one embodiment, the user can be a driver of a vehicle that is a part of a fleet. The vehicle is installed with a device that is configured to monitor user's driving behavior of the vehicle. The device may generate data corresponding to the user's driving behavior and the data is stored in a data storage which can be accessed by a fleet manager to observe the driving behavior of the user. The data is stored in the database along with a tag that corresponds to the user.

The driver/user may want to access the data to understand his driving behavior and to improve his driving behavior. The data can be too large to be processed by the driver and the driver may not be able to draw any conclusions from the data in its stored format. Further, the service provider may generate custom scores that are also part of the data. Drivers may have difficult times understanding the definitions and implications of the custom scores. However, a machine learning model can be configured to help the driver understand his driving behavior without providing driver identification information to the model.

Upon receiving a query from the driver, the data corresponding to the driver is retrieved from the data storage based on the driver ID. The retrieved data is provided to the data classifier and the data classifier is configured to identify personal data from the retrieved data. The personal data can be the data which can reveal the identity of the driver as well as the service provider. The data classifier identifies personal data that has to be anonymized or encrypted or removed from the retrieved data. The data classifier sends the identified personal data along with the retrieved data to the data anonymizer. The data anonymizer is configured to anonymize the personal data in the driver's data before sending the driver's data to the model for further processing. The model receives a query along with the driver's data and the model provides a response to the query based on the driver's data and the query. The model provides the response to a data de-anonymizer that is configured to add the personal data to the response. The response is displayed to the user on the user device and the user may provide feedback to the response. The feedback is stored along with the response in the data storage. The feedback is reviewed by a moderator on a real-time basis or periodically. The moderator is configured to correct the response when there is negative feedback and use the corrected response to the train the model.

In one aspect, a driver assistance may include a language model.

In one aspect, a method may include receiving video data from a vehiclemounted camera; processing video data with a vision-based neural network to detect objects in a sequence of frames; representing the detected objects in a text-based format; processing the textual representation with a language model to produce a description of the event; and generating a driver alert the based on the textual representation.

In one aspect, a method may include receiving a plurality of human judgements about detected safety events, each safety event belonging to a driving scenario (wherein the driving scenario is passing a stop sign); summarizing the human judgements / ask LLM to match text-based explanation of human judgements to a set of standardized descriptions; and asking a large language model to explain the difference between correctly and incorrectly characterized safety events.

In one aspect, a method may include receiving a plurality of human judgements about detected safety events, each safety event belonging to a driving scenario (wherein the driving scenario is passing a stop sign); summarizing the human judgements / ask LLM to match text-based explanation of human judgements to a set of standardized descriptions; and asking a large language model to explain the difference between correctly and incorrectly characterized safety events.

In one aspect, a method may include receiving computer code, wherein the computer code is configured to process sequences of object detections for objects found on or near a road; (as detected from a windshield); wherein the computer code performs one or more logical operations defining how a traffic event is classified. The code can detect common error modes and suppress those errors. The code can modify the characterization based on a logic.

### Using a Large Language Model for Driver Clustering

Driving safety is a significant concern for individual drivers, car manufacturers, and government transportation agencies. To better understand driving behavior and improve the overall safety levels on public roads, various data collection and analysis technologies and methods have been developed, such as using telematic devices to monitor vehicle speeds, locations, and other aspects of vehicle operation.

However, these traditional data collection methods often focus predominantly on isolated and discreet aspects of driving, neglecting the underlying patterns and correlations among different driving characteristics and behaviors. This can be the case because, for example, the underlying patterns and correlations may not be visible from the individual pieces of data alone or because there may be a large number of driving characteristics and behaviors to be evaluated that may make typical rule-based or machine learning-based pattern analysis difficult to achieve. Furthermore, these methods often lack a comprehensive and sophisticated analysis mechanism that can fully utilize the collected data to evaluate driving proficiency, predict potential risks, and recommend personalized improvement measures.

To address these technical challenges, a computer or computing device implementing the systems and methods described herein may implement a machine learning language processing model that is configured to process datasets that representing driving behavior and/or driving events for individual drivers. By receiving and processing datasets containing individual driving data for multiple drivers, the computer or computing device can generate an "embedding" for each driver based on a dataset that the computer receives for the driver. The computer can execute a clustering model (e.g., K-Means Clustering, hierarchical clustering, Density-Based Spatial Clustering of Applications with Noise (DBSCAN) clustering, mean shift clustering, Gaussian Mixture Models (GMM), agglomerative clustering, etc.) on the embeddings to group the embeddings into clusters based on common or similar driving attributes and/or driving characteristics or other driving data that is present in the datasets from which the embeddings were generated.

The computer can use the clusters of embeddings to determine messages to generate and/or transmit to drivers represented in the clusters. For example, the computer can determine a first value of a first driving attribute (e.g., number of driving accidents on the road) of a first set of drivers of a first cluster of the plurality of clusters and a second value of the first driving attribute of a second set of drivers of a second cluster of the plurality of clusters. The computer can identify a second driving attribute (e.g., driving at night or speeding over the speed limit) that can be improved to improve the values of the first driving attribute by determining a third value of the second driving attribute of the first set of drivers of the first cluster and a fourth value of the second driving attribute of the second set of drivers of the second cluster. The computer can generate (e.g., automatically transmit) a message to the electronic devices of the drivers of the second cluster indicating to improve the second driving attribute in their driving behavior to improve the first driving attribute. The drivers can adjust their driving behavior according to the message, therefore improving driver safety on the road.

In some cases, the computer can generate scores for the individual drivers. The scores can be driver scores that indicate a safety or capability of a driver represented by a particular score. The computer can generate the scores based on the clusters in which the embeddings for the drivers are located. For example, the computer can generate scores (e.g., cluster scores) for individual clusters based on attributes of drivers represented by embeddings in the respective clusters. The computer can generate the scores for individual clusters based on the driving data of the respective clusters in the aggregate, such as by applying one or more rules to driving data of the clusters. The computer can generate and assign a cluster score to each cluster. The computer can set (e.g., store in memory or in data structures for the respective drivers) the driver scores for the individual drivers based on the cluster scores of the cluster to which the drivers correspond.

In some cases, the computer can use traffic data collected from a remote data source to generate scores for the individual clusters. The traffic data can include data regarding accidents, incident reports, etc. The computer can collect the traffic data from a remote database (e.g., a database hosted or maintained by an agency, a government agency, or a government division). The computer can use the traffic data alone to determine scores of the individual clusters or traffic data in combination with the driving attributes of the drivers of the individual clusters. For example, the computer can generate scores (e.g., cluster scores) for individual clusters based on traffic data received for the respective clusters (e.g., received for the drivers represented by embeddings contained in the respective clusters). The computer can generate the scores for individual clusters based on the traffic data and/or the driving attributes of the respective clusters in the aggregate, such as by applying one or more rules to the traffic data and/or attributes of the respective clusters. The computer can assign a cluster score to each cluster based on the traffic data and/or the driving data.

The computer can use the cluster scores to determine the drivers for which to generate messages. For example, the computer can compare the cluster scores of the different clusters between each other. In doing so, the computer can determine a cluster with a cluster score that is lower than a cluster score of another cluster by at least a threshold amount. Responsive to doing so, the computer can determine values of different driving attributes of the two clusters. The computer can determine values of two driving attributes of the lower scoring cluster that are lower or that represent values of the same driving attributes of the higher scoring cluster. Based on the identification of, the computer can determine there is at least a correlation between the driving attributes and safe driving and generate a message indicating to improve at least one of the two values to the drivers of the lower scoring cluster.

By using a machine learning language processing model and a clustering computer model to generate scores or messages for driver improvement, the computer can use larger and more complex amounts of data with a large number of data points to analyze different drivers using fewer processing resources and with less latency than with other methods. For example, a machine learning language processing model may take into account a larger and larger number of data points (e.g., receive larger prompts) as a machine learning language processing model is reconfigured or retrained over time. The machine learning language processing model may be able to generate embeddings using the large number of data points quickly and without further input from a user. Because the embeddings can have a fixed length regardless of the amount of data that is input into the machine learning language processing model and may not otherwise have any meaning to a human, the embeddings may be placed into a vector space in different clusters and further processed without attempting to identify patterns between individual data points. By using the embeddings and clustering techniques, the computer can process the data of the datasets without doing so on a data point-by-data point basis to determine patterns between individual and different combinations of data points, which would require a large amount of time and significant processing resources. Thus, the systems and methods described herein may facilitate the computer's ability to process large datasets quickly and using fewer computing resources than other techniques may require.

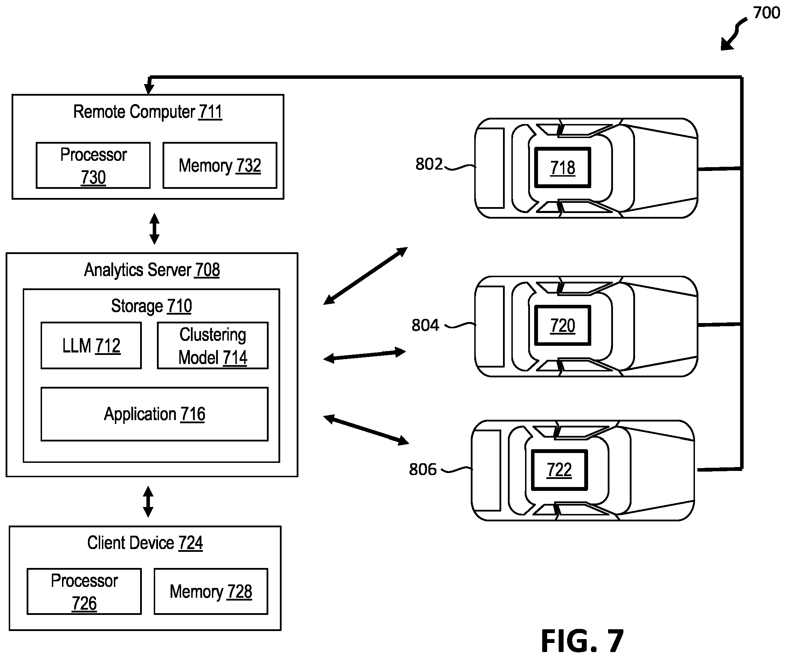

For example, **FIG. 7** illustrates an example environment showing a computing system for implementing a generative artificial intelligence model for cohort or fleet analysis, according to an embodiment. Various other system architectures may include more or fewer features and/or may utilize the techniques described herein to achieve the results and outputs described herein. Therefore, the system depicted in **FIG. 7** is a non-limiting example.

**FIG. 7** illustrates a system **700,** which includes components of a driver analysis system **705** involving a generative artificial intelligence model. The system **700** can include one or more vehicles **702, 704,** and **706,** an analytics server **708,** a remote computer **711,** and/or a client device **724.** The analytics server **708** can be the same as or similar to the cloud computing system **115,** shown and described with reference to **FIG. 1****.** The client device **724** can be the same as or similar to the computing device **155,** shown and described with reference to **FIG. 1****.** One or more of the vehicles **702-706** can be the same as or similar to the vehicle **110,** shown and described with reference to **FIG. 1****.** The components **702-712** can communicate with each other via a communications network (not shown). The system **700** is not confined to the components described herein and may include additional or other components, not shown for brevity, which are to be considered within the scope of the embodiments described herein.

The analytics server **708** can include a storage **710,** which can store images and/or video captured by cameras of the vehicles **702-706** and/or datasets indicating driving data regarding different drivers of the vehicles **702-706** or the vehicles **702-706** themselves. The storage **710** can additionally or instead include a large language model (LLM) **712,** a clustering model **714,** and/or an application **716.** The storage **710** can be or include a computer-readable memory that can store or maintain any of the information described herein that is generated, accessed, received, transmitted, or otherwise processed by the analytics server **708.** The storage **710** can maintain one or more data structures, which may contain, index, or otherwise store each of the values, pluralities, sets, variables, vectors, numbers, or thresholds described herein. The storage **710** can be accessed using one or more memory addresses, index values, or identifiers of any item, structure, or region of memory maintained by the storage **710.**

The storage **710** may be internal to the analytics server **708** or may exist externally to the analytics server **708** and accessed via a suitable bus or interface. In some implementations, the storage **710** can be distributed across many different storage elements. The analytics server **708** (or any components thereof) can store, in one or more regions of the memory of the storage **710,** the results of any or all computations, determinations, selections, identifications, generations, constructions, or calculations in one or more data structures indexed or identified with appropriate values.

The analytics server **708** can include or be in communication with a communication interface that can communicate wirelessly with other devices. The communication interface of the analytics server **708** can include, for example, a Bluetooth communications device, a Wi-Fi communication device, or a 5G/LTE/3G cellular data communications device. The communication interface can be used, for example, to receive traffic data (e.g., indications of accidents, traffic tickets, or other driving incidents associated with different drivers or vehicles) from the remote computer **711.** The communication interface can also be used, for example, to receive driving data from the vehicles **702-706.** The driving data can be or include sensor data generated by one or more sensors of a vehicle. For example, the driving data can include accelerometer data, sensor data indicating the speed or velocity of the vehicle, gyroscopic data, and tire air pressure data. The driving data can additionally or instead include weather data indicating the weather that corresponds to the times in which the sensor data or other data was generated. The driving data can additionally or instead include global positioning system (GPS) data indicating the geographic location of the vehicle over time (e.g., at different points in time). The driving data can additionally or instead include data indicating the regulations in place on the surface or the geographical region in which the vehicle was driving when the sensor data or any other data was collected. For example, the driving data can include an indication of a speed limit, a stop sign, a stop light, a yield sign, etc. The driving data can include any type of driving data.

In some cases, computing devices of the vehicles themselves can analyze sensor data, images collected by cameras of the vehicles, and/or other data to determine driving metrics for a vehicle. For example, the vehicles **702-706** can respectively include computing devices **718-722.** The computing devices **718-722** can be perception engines and/or can be similar to or the same as the computing device **120,** shown and described with reference to **FIG. 1****.** The computing devices **718-722** can collect and/or aggregate sensor data collected by one or more sensors of the respective vehicles **702-706** and into driving metrics. Driving metrics can be or include, for example, average speed, top speed, speed relative to a speed limit, average following distance, number of instances in which a vehicle is within a threshold distance (which may vary or be a function of the velocity of the vehicle), time during the day spent driving, etc. The computing devices **718-722** can collect sensor data and/or images from the sensors and/or images of the vehicles **702-706** and generate such metrics for the vehicles **702-706** based on the collected data. The computing devices **718-722** can do so using defined rules or functions on data that is relevant to the different metrics, such as by calculating an amount of time spent driving after 9 PM, by detecting the number of instances in which an image or sensor data (e.g., reflective sensor data) indicates an object or vehicle in front of one of the vehicles **702-706** is within a threshold distance of the vehicle **702, 704,** or **706,** or by calculating a magnitude and/or time in which the vehicle travels above a speed limit. The computing devices **718-722** can calculate any metrics for the vehicles. The computing devices **718-722** can calculate or generate such metrics with data periodically at set intervals or pseudo-randomly. The computing devices can transmit the driving metrics to the analytics server **708** responsive to calculating or generating the driving metrics. The analytics server **708** can receive the metrics and/or any other driving data from the vehicles **702-706** and store the driving metrics and/or driving data in the storage **710.**

The computing devices **718-722** can include identifications of the respective vehicles **702-706** and/or drivers of the vehicles **702-706** in the messages to the analytics server **708** containing the driving data and/or driving metrics. The identifications can be identifications that correspond with accounts of the respective vehicles **702-706** or drivers. For example, the computing devices **718-722** may be configured to include identifications of the vehicles **702-706** for which the computing devices **718-722** can collect driving data and/or for drivers of the respective vehicles **702-706.** The computing devices **718-722** can include the identifications in the messages to indicate the drivers and/or vehicles that correspond to the driving data and/or driving metrics. The analytics server **708** can receive the identifications and store the driving data and/or driving metrics in the storage **710** (e.g., in a database in the storage **710**) with the identifications such that the data can be queried or otherwise grouped based on the identifications.

The analytics server **708** can use the driving data and/or the driving metrics to cluster vehicles such as the vehicles **702-706** and/or drivers of the vehicles **702-706.** For example, the analytics server **708** can execute the application **716** to query the storage **710** for driving data and/or driving metrics for individual drivers. The application **716** can do so, for example, by performing a SQL query when the data and/or driving metrics are stored in rows of a database. The application **716** can retrieve the data for the different drivers and generate a dataset for each individual driver from the retrieved data. The application **716** can generate the datasets as text in paragraph form (e.g., as separate paragraphs for individual drivers) or in separate bullet points that each correspond to retrieved data of a different driver. The text of the respective datasets can include alphanumerical characters that describe or include the driving data or driving metrics for the individual drivers.

The analytics server **708** can execute the application **716** to input the datasets into the LLM **712.** The LLM **712** can be a large language model, a neural network that may be or include a transformer model, or any other type of model that is configured to generate embeddings based on input text. The application **716** can separately input the datasets for the individual drivers into the LLM **712** and execute the LLM **712** for each dataset. Based on the executions, the LLM **712** can output (e.g., from an embedding layer of the LLM **712**) a separate embedding for each dataset including driving data and/or driving metrics for a different driver. The embeddings can be numerical, alphabetical, or alphanumerical values (e.g., values of a defined length) that represent the individual datasets. The embeddings can vary between the datasets based on the data of the respective datasets. The application **716** can identify embeddings output by the LLM **712** and store the embeddings in a database in storage **710,** for example. The application **716** can store the embeddings with the identifications of the drivers for which the embeddings were generated and/or the data from which the embeddings were generated.

The analytics server **708** can execute the application **716** to cluster the embeddings together using the clustering model **714.** The clustering model **714** can be or include a clustering computer model (e.g., a clustering machine learning model) that is configured to generate clusters of similar data points. The clustering model **714** can be or include one or more of a K-means clustering model, a hierarchical clustering model, a density-based spatial clustering of applications with noise (DBSCAN) model, a mean shift clustering model, a Gaussian mixture model, etc. The application **716** can input the embeddings generated by the LLM **712** into the clustering model **714** and execute the clustering model **714.** Based on the execution, the clustering model **714** can cluster the embeddings based on the similarities of the embeddings between each other in a multi-dimensional vector space. The vector space may have any number of dimensions. The clustering model **714** can generate clusters based on the different rules or parameters of the clustering model **714,** which can vary depending on the type of the clustering model **714.**

The analytics server **708** can execute the application **716** to analyze the clusters of embeddings generated by the clustering model **714.** The application **716** can do so on a cluster-by-cluster basis. For example, the application **716** can identify a cluster (e.g., a first cluster) of the clusters generated by the clustering model **714** with embeddings representing different drivers. The application **716** can retrieve the datasets that were used to generate the embeddings of the identified cluster from the storage **710.** The application **716** can identify a driving attribute that is common (e.g., contained in or can be derived from) to each or a defined number of the retrieved datasets. Examples of such attributes can be a speed relative to a speed limit, a speed relative to a specific speed limit (e.g., 65 miles per hour), an average following distance, an average amount of time driving after 9 PM, etc. The application **716** can retrieve an expected attribute from the storage **710** of the same type (e.g., that also indicates a speed relative to a speed limit, a speed relative to a specific speed limit, an average following distance, an average amount of time driving after 9 PM, etc.). The expected attribute can be input by an administrator or determined as a function of (e.g., as an average or median of) or based on the datasets of each of the drivers represented by embeddings in the cluster. The application **716** can compare the common driving attribute to the expected attribute to determine a difference between the common driving attribute and the expected attribute. The application **716** can determine such differences for any number of common driving attributes of a cluster and/or for any number of clusters.

The application **716** can generate a message to send to electronic devices of drivers represented by the cluster. The application **716** can do so responsive to determining the difference between the common driving attribute and the expected attribute exceeds a threshold. For example, the application **716** can determine each driver within the cluster drives 15 miles per hour over a speed limit on average. The expected attribute for speed over a speed limit may be the speed limit itself or a value above or below the speed limit. The application 716 can determine the common driving attribute of driving 15 miles per hour over the speed limit exceeds the expected value or exceeds the expected value by an amount exceeding a threshold. Responsive to the determination, the application **716** can generate a message. The message can include an indication (e.g., text) to drive slower. The application **716** can identify an account of each driver of the cluster from the storage **710,** retrieve an address (e.g., an electronic address) of an electronic device (e.g., an email address, a device address, or a phone number) of each driver from the accounts, and transmit the message to the electronic devices using the retrieved addresses. For example, the application **716** can transmit the message to the client device **724,** which may have a processor **726** and a memory **728.** The client device **724** can present the message on a user interface to a driver of one of the vehicles **702-706.** Thus, the application **716** can generate and transmit messages to improve the driving of drivers within the cluster and improve the safety of the roads.

In some cases, the application **716** can generate scores for the individual drivers using the clusters of embeddings representing the drivers. For example, the application **716** can generate a cluster score for each of the clusters of embeddings. The application **716** can do so by applying one or more rules to the driving data or driving metrics of the datasets used to generate the embeddings of each cluster. For example, the application **716** can aggregate, average, or sum the different driving metrics of the drivers of a cluster (e.g., the first cluster). In some cases, the application **716** can apply weights to the different driving metrics to use when applying a function to the driving metrics of the cluster. The output of the aggregate, average, sum, or any other function of the driving metrics can be a cluster score for the cluster. The application **716** can set the driver scores for the drivers of the cluster to be the cluster score for the cluster or can determine the driver scores for the drivers based on a distance of the driving metrics for the driver to the aggregate, average, or sum of the driving metrics of the cluster (e.g., the closer the distance to the driving metrics of the cluster, the closer the driver score for a driver to the cluster score for the cluster). The application **716** can determine cluster scores and/or driver scores for drivers in any manner. The application can assign the driver scores to the accounts for which the application **716** determined the driver scores, such as by inserting the driver scores into data structures for the respective accounts.

The application **716** can transmit the driver scores to the electronic devices of drivers for which the scores were generated. The application **716** can transmit the driver scores in messages that include the driver scores and/or the driving metrics that were used to generate the driver scores. The electronic devices can present driver scores on a user interface, in some cases with the driving metrics or driving data that was used to generate the driver scores. Thus, the drivers can view their driving performance and areas to improve their driving.

The application **716** can generate scores or determine common driving attributes of drivers of a cluster of embeddings based on data from a remote data source. For example, the remote computer **711** can include a processor **730** and memory **732** and can store traffic data regarding the drivers represented by embeddings of the clusters. The traffic data can include data indicating traffic violations, accidents, and/or any other type of traffic data regarding incidents that occur while the drivers are driving. The application **716** can request the traffic data from the remote computer **711,** and the remote computer **711** can respond to the requests with the traffic data. The application **716** can receive the traffic data and assign the traffic data to the accounts or embeddings for which the traffic data was generated. The application **716** can determine a common driving attribute of the traffic data of drivers of a cluster and compare the common driving attribute of the traffic data to an expected attribute of the traffic data to determine a difference between the common driving attribute and the expected attribute. The application **716** can do so in a similar manner to how the application **716** determines the difference between the common driving attribute and the expected attribute of driving metrics for a cluster. The application **716** can generate and/or transmit messages to the electronic devices of the drivers responsive to determining the difference exceeds a threshold. The message can indicate to adjust the driving of the drivers, such as to reduce the common driving attribute in the traffic data (e.g., reduce the number of red lights or stop signs the driver runs or is ticketed for running).

In some cases, the application **716** can determine scores for drivers based on the traffic data of the cluster in a similar manner to how the application **716** determines scores for drivers based on the driving data or driving metrics. In the application **716** can determine the scores based only on the traffic data or based on a combination of the traffic data and the driving data or driving metrics of the drivers. The application **716** can transmit the driver scores and/or any data used to generate the scores to the electronic devices of drivers for which the scores were generated for display on a user device to help improve the driving of the drivers.

In another example, the application **716** can use correlations in driving attributes between clusters to determine driving attributes to recommend for improvement to drivers of a cluster. For example, the application **716** can determine a second cluster that represents less safe drivers than a first cluster. The application **716** can do so by determining the first cluster corresponds to a higher cluster score than the second cluster and/or by using a rule-based system to compare the traffic data and/or driving data of the drivers between the clusters. For instance, the application **716** can determine the first cluster represents safer drivers based on the first cluster corresponding to fewer traffic accidents or driving tickets than the second cluster. The application **716** can determine two driving attributes of the first cluster that have values that are safer than values of the same driving attributes of the second driving cluster. In one example, the application **716** can determine that the first cluster of drivers has a lower average number of accidents within a defined time period (e.g., the previous five years) than the second cluster and also has less time driving at night (e.g., on a daily or weekly basis).

Responsive to the determination of the two driving attributes in which the second cluster of drivers are safer than the first cluster of drivers, the application **716** can generate a message to send to electronic devices of the second cluster of drivers. The application **716** can include a text indication to improve one of the driving attributes, in some cases with a defined amount for the improvement. For instance, continuing with the example above, the message can include a text indication to reduce the amount of night-time driving by the difference between the amount of time the drivers in the safer cluster drive at night and the amount of time the drivers in the less safe cluster drive at night. In doing so, the application **716** can generate a message that can improve the cluster score of the less safe cluster and/or can inform the drivers of the less safe cluster how to improve their driving.

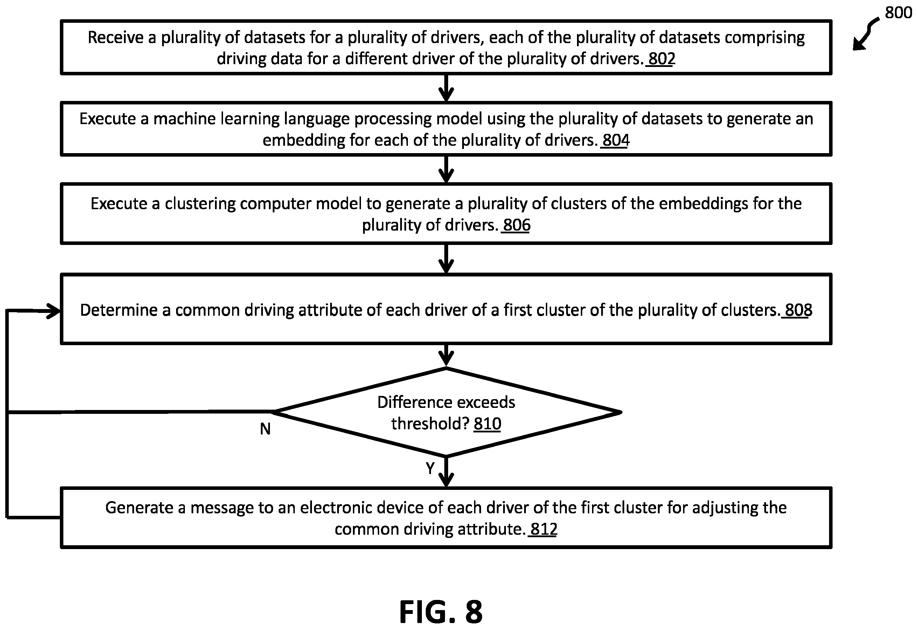

**FIG.** 8 illustrates a flow of a method **800** for implementing a generative artificial intelligence model for cohort or fleet analysis executed by a data processing system. The data processing system can be or include a computing system (e.g., the analytics server **708)** and/or a remote computing system (e.g., a cloud server or the cloud computing system **115)** for using a generative artificial intelligence model for vehicle analysis of a cohort of vehicles. The method **800** is shown to include steps **802-812.** However, other embodiments may include additional or alternative steps, or may omit one or more steps altogether. Different steps can be performed by different computing systems (e.g., the computing system of the vehicle can perform one or more of the steps **802-812** and/or the remote computing system can perform one or more of the steps **802-812**) and/or the different computing systems and can operate together to perform individual steps of the steps **802-812.**

In step **802,** the data processing system receives a plurality of datasets for a plurality of drivers. The plurality of datasets can each include driving data and/or driving metrics generated for an individual driver or vehicle. The driving data can be or include sensor data generated by one or more sensors of a vehicle (e.g., accelerometer data, sensor data indicating the speed or velocity of the vehicle, gyroscopic data, and/or tire air pressure data), weather data indicating the weather that corresponds to the times in which the sensor data or other data was generated, global positioning system (GPS) data indicating the geographic location of the vehicle over time (e.g., at different points in time), data indicating the regulations (e.g., a speed limit, a stop sign, a stop light, a yield sign, etc.) in place on the surface or the geographical region in which the vehicle was driving when the sensor data or any other data was collected, etc. In some cases, the driving data can include driving metrics. Driving metrics can be metrics or values that the vehicles determine locally (e.g., on-device at the vehicles) based on sensor data or driving data that the vehicles respectively collect. Driving metrics can be or include, for example, average speed, top speed, speed relative to a speed limit, average following distance, number of instances in which a vehicle is within a threshold distance (which may vary or be a function of the velocity of the vehicle), time during the night spent driving, etc. The data processing system can receive the driving data and/or driving metrics for different drivers or vehicles from the vehicles (e.g., from the vehicles and over a network). The data processing system can receive such driving data as the vehicles transmit the driving data to the data processing system at set intervals or pseudo-randomly. The data processing system can store the driving data in a database or in memory with indications of the drivers or vehicles for which the driving data was generated.

In step **804,** the data processing system executes a machine learning language processing model. The machine learning language processing model can be a large language model, a neural network that may be or include a transformer model, or any other type of machine learning model configured to generate text outputs. The data processing system can execute the machine learning language processing model using datasets for each of the respective drivers as input. For example, the data processing system can retrieve the received driving data for a driver from the database or memory. The data processing system can aggregate the received driving data into a dataset in a tokenized form, which may be in paragraph form, as a bullet point, or in another text-based format. The data processing system may similarly generate datasets in this manner for each driver for which the data processing system received driving data. The data processing system may separately input the datasets for the drivers into the machine learning language processing model and execute the machine learning language processing model. Based on the executions, the data processing system can generate embeddings (e.g., numerical, alphabetical, or alphanumerical text, which may have a fixed length) representing the respective input datasets. The data processing system can store the embeddings in accounts (e.g., data structures dedicated to storing data of the accounts) of the drivers for which the embeddings were generated.

In step **806,** the data processing system executes a clustering computer model. The clustering computer model can be a K-Means Clustering model, a hierarchical clustering, a Density-Based Spatial Clustering of Applications with Noise (DBSCAN) clustering model, a mean shift clustering model, a Gaussian Mixture Models (GMM) model, an agglomerative clustering model, or any other type of clustering model. The data processing system can execute the clustering model using the embeddings generated by the machine learning language processing model as input. The execution of the clustering computer model using the embeddings as input can cause the clustering computer model to place the embeddings in a multi-dimensional vector space. The clustering computer model can group the embeddings that are within a defined distance of each other within the multi-dimensional vector space into separate clusters. Such can be the case, for example, if the driving data from which a cluster of embeddings was generated is similar to each other within a threshold. By clustering the embeddings in this way, the data processing system can group embeddings of similar drivers based on patterns in the driving data that may not otherwise be apparent and/or take into account more attributes or driving features for the groupings than may otherwise be possible when apply rules-based or machine learning model-based approaches on datasets of driving data given the large number of potential attributes in the driving datasets and the large number of datasets that may be available.

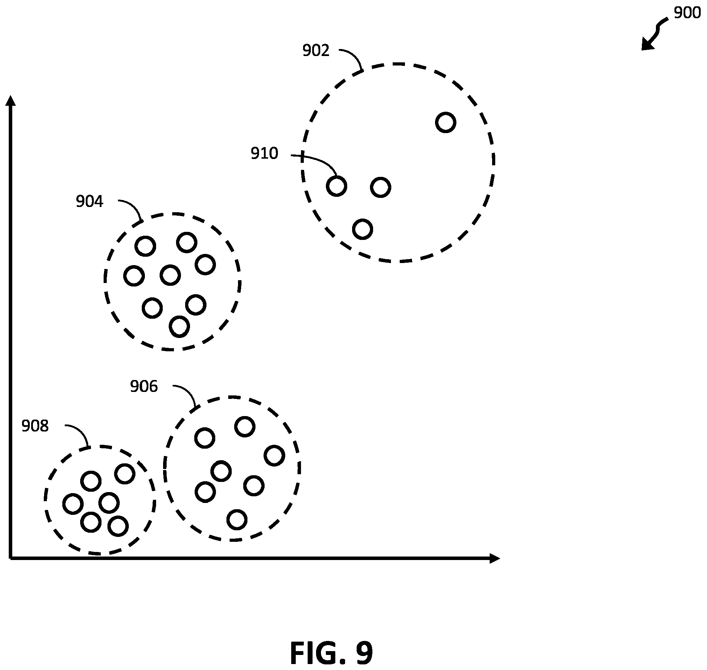

For example, referring now to **FIG. 9, FIG. 9** illustrates a vector space **900** that the clustering computer model has populated or generated with clusters of embeddings representing the driving data of different drivers, according to an embodiment. The vector space **900** can include clusters **902-908** that each includes a number of embeddings, such as an embedding **910,** representing different drivers. The data processing system can use the clusters to analyze the driving data and driving performance of the drivers represented by the embeddings in the vector space.

Referring back to **FIG. 8****,** in step **808,** the data processing system determines a common driving attribute of each driver of a cluster (e.g., a first cluster) of the clusters in the vector space. A driving attribute can be a value or characteristic that is included in or can be derived from a dataset of driving data or driving metrics. For example, a driving attribute can be or include a speed relative to a speed limit, a speed relative to a specific speed limit (e.g., 65 miles per hour), an average following distance, an average amount of time driving after 8 PM, etc. Such driving attributes may be included in or derived from the datasets that the data processing system put into the machine learning language processing system to generate embeddings for different drivers. The data processing system can identify or determine attributes of the drivers based on the datasets of driving data for the drivers (e.g., a function on or otherwise based on driving data of the datasets). The data processing system can compare driving attributes of the same type determined for each of the drivers and identify driving attributes that are the same or that are within a threshold (e.g., a defined threshold) or range (e.g., a defined range) of the driving attributes of each other driver represented by an embedding of the same cluster in the vector space. The identified driving attributes can be common driving attributes for the cluster.

For example, the data processing system can determine a common driving attribute for a cluster is driving 20 miles per hour over the speed limit. The data processing system can determine such a common driving attribute by identifying driving metrics for the drivers indicating an average speed of the vehicles the drivers drive over the speed limit. The data processing system can determine each of the drivers drive an average of 20 miles per hour over the speed limit or drive within a defined range of driving 20 miles per hour over the speed limit (e.g., within one or more two miles per hour of twenty miles per hour over the speed limit). In another example, the data processing system can determine that each driver tailgates four vehicles on average per day. The data processing system can do so based on driving metrics indicating the instances of tailgating in the datasets or by analyzing sensor data in the datasets that indicate the relative proximity of objects in front of the vehicles to the vehicles. The data processing system can determine tailgating another vehicle four times per day is a common attribute based on each vehicle having data indicating the vehicle tailgates four times per day tailgates three or five times per day (e.g., within a range of plus or minus one tailgating instance). The data processing system can determine any number of common driving attributes for any type of driving attribute for a cluster.

In some cases, instead of determining a driving attribute is a common driving attribute of a cluster based on each driver of the cluster having the driving attribute, the data processing system can determine a driving attribute is common to a cluster based on at least a defined number, a threshold number, a defined percentage, or a defined portion of drivers of the cluster having the driving attribute. Such may be beneficial, for example, for driving attributes where there is likely to be a large amount of variance and are less likely to be common driving attributes for each driver of the cluster. The data processing system may use different criteria for identifying common driving attributes for a cluster for different types of driving attributes, which may vary depending on the variability of the driving attributes themselves (e.g., an average following distance may have a higher variance, and therefore may have a lower threshold for determining a common driving attribute for a cluster than an average number of stoplights a vehicle runs a day, which may have a low variance and require each driver of the cluster to have the same number of average stoplights that are run a day to be considered a common driving attribute for a cluster).

In some cases, the number of drivers that are required to have the same driving attribute in a cluster for the driving attribute to be a common driving attribute in the cluster can depend on the importance of the driving attribute (e.g., an important driving attribute, such as stopping at stop signs may require a lower number of drivers to have the same attribute to be considered a common driving attribute of a cluster than a less important driving attribute, such as average breaking distance to stop at a stop light, or vice versa).

The data processing system can determine a common attribute of drivers of a cluster based on data regarding the drivers outside of the data that the data processing system used to generate the embeddings and the cluster. For example, the data processing system can determine a common driving attribute between drivers from traffic data regarding the drivers of the cluster. Traffic data can be or include traffic violations, accidents, and/or any other type of traffic data regarding incidents that occur while the drivers are driving. The data processing system can receive or retrieve the traffic data from a remote data source (e.g., a database stored in a remote computer from the data processing system, such as a database managed by a government entity or agency). The data processing system can identify driving attributes for the individual drivers of a cluster from the traffic data, such as the total number of traffic violations, the number of traffic violations of specific types, the number of accidents in which the driver was involved, the number of accidents in which the driver was determined to be at fault, etc. The data processing system can determine whether any driving attributes of the traffic data are a common driving attribute of a cluster based on whether each driver of the cluster has the driving attribute or a defined number or portion of the cluster has the driving attribute, such as by using the methods described above with respect to determining a common driving attribute from driving data.

The data processing system can identify or determine an expected driving attribute of the same driving attribute type to a common driving attribute that the data processing system determines for a cluster. For example, the data processing system can store expected driving attributes for the individual driving attributes in memory or in a database. The expected driving attributes can be input by an administrator or user or the data processing system can determine the expected driving attributes. The data processing system can determine the expected driving attributes by using a function on the values of the driving attributes across all of the embeddings or clusters of the vector space, for example, such as by determining a median or average of the respective driving attributes from datasets of drivers represented by embeddings in the vector space. The expected driving attributes can be determined or identified in any manner and, in some cases, differently for different types of embeddings.

In step **810,** the data processing system determines whether a difference between a common driving attribute and an expected driving attribute of the same type exceeds a threshold. To do so, for example, the data processing system can determine a difference between the common driving attribute and the expected driving attribute, such as by subtracting the value of the common driving attribute from the expected driving attribute, or vice versa. The data processing system can compare the difference to a threshold to determine whether the difference exceeds the threshold. In some cases, the threshold may be zero or the data processing system can determine the difference exceeds the threshold when the common driving attribute exceeds the expected driving attribute.

The data processing system can select the threshold from memory or a database. For example, different types of driving attributes can correspond to different thresholds. The data processing system can identify a type of the common driving attribute and retrieve the threshold for the type of driving attribute from memory. The data processing system can do so, for example, by using an identification of the type of driving attribute to query the database or memory for a threshold that corresponds with a matching identification in a look-up technique. The data processing system can compare the difference between the common driving attribute and the expected driving attribute to the retrieved threshold.

In step **812,** the data processing system generates a message to electronic devices of drivers represented by embeddings in the cluster for which the data processing system determined the common driving attribute exceeds the expected driving attribute by at least a threshold. The data processing system can generate the message responsive to determining the common driving attribute exceeds the expected driving attribute by at least the threshold. The data processing system can generate the message to include text indicating to adjust the driving behavior of drivers of the cluster to bring the common driving attribute to the expected driving attribute. For instance, the data processing system can generate the message to include text indicating to slow down responsive to determining drivers of a cluster have a common driving attribute of driving 15 miles per hour over the speed limit on average when the expected driving attribute is 0 miles per hour over the speed limit. The data processing system can generate the message by retrieving text from a database that stores text corresponding to different driving attribute types of expected driving attributes. In some cases, the data processing system can input the expected driving attribute, the common driving attribute, and/or the difference between the expected driving attribute and the common driving attribute into a machine learning language processing model and the machine learning language processing model can generate text for the message. The data processing system can generate the message in any manner.

The data processing system can transmit the generated message to an electronic device of each driver represented in the cluster or only the drivers with the common driving attribute. For example, the data processing system can identify addresses (e.g., email addresses, phone number, device addresses, etc.) of electronic accounts for the drivers of the cluster from accounts of the driver that the data processing system stored in memory. The data processing system can use the addresses to transmit the message to all of the drivers of the cluster or only the drivers of the cluster with the common driving attribute. The electronic devices of the drivers can each receive the message and display the message on a display in a user interface. Thus, the data processing system can transmit messages to the drivers to cause the drivers to drive more safely on the road in a targeted and specific manner, improving the safety of the road in general.

The data processing system can repeat the steps **808-812** any number of times for any number of attributes in the traffic data or the driving data for different clusters. For instance, the data processing system can determine at least a defined number of drivers of a cluster experienced at least a threshold number of traffic accidents from traffic data for the cluster. The data processing system can do so by determining at least a defined portion of the cluster (e.g., a second cluster) of embeddings correspond to the driving attribute of being involved in at least a threshold number of traffic accidents. The threshold number can be a difference between the number of driving accidents and zero, for example. Responsive to the determination, the data processing system can transmit a message to the electronic device of each driver of the cluster or to the drivers that experienced the threshold number of traffic accidents indicating to drive more carefully. The message can include an indication that is specific to the common driving attribute that is different than an expected driving attribute by at least a threshold amount, such as a text indication to reduce a driver's average speed when the common driving attribute is driving 15 mph above the speed limit or to increase the driver's average following distance when the driver is identified as tailgating in instances above an expected amount. The message can include an indication of the difference between the common driving attribute and the expected driving attribute to illustrate the magnitude of the suggested change.

In some cases, the data processing system can determine scores (e.g., driver scores or driver scores) for individual drivers of the clusters. The scores can each be a numerical value within a range (e.g., between 1 and 10 or between 1 and 100). The data processing system can determine the scores for the drivers based on the clusters that contain the embeddings representing the individual drivers. For example, the data processing system can determine a score (e.g., a cluster score) for each of the clusters. The cluster scores can each be a numerical value within a range (e.g., between 1 and 10 or between 1 and 100). The data processing system can determine the cluster scores based on driving data and/or traffic data of the drivers represented by embeddings within the cluster. For instance, the data processing system can apply one or more rules to the traffic data or driving data of a cluster to determine a score for the cluster. The rules can include, for example, scores or score impacts based on a number of traffic accidents within the cluster, an average following distance, a number of traffic tickets or traffic infractions, an amount of time spent driving at night, a number of emergency brakes employed, etc. The data processing system can identify rules that are satisfied for a cluster and determine a cluster score for the cluster based on the satisfied rules. In some cases, the data processing system can employ a function on the traffic data and/or driving data. The function can be, for example, an average, a weighted average, a median, a sum, etc. The output of the function can be the cluster score for the cluster. The data processing system can determine the cluster scores for individual clusters in any way.

In some cases, the data processing system can determine cluster scores relative to each other. For example, the data processing system can compare different types of traffic data and/or driving data between the clusters and determine differences in the traffic data and/or driving data between the clusters. The data processing system can execute a function on the differences, such as by determining an average, sum, weighted sum, weighted average, etc., on the differences, to determine cluster scores for the individual clusters.

The data processing system can determine driver scores for the drivers based on the cluster scores of the clusters containing the embeddings representing the drivers. For example, the data processing system can set the driver score for a driver to be equal to the cluster score of the cluster containing the embedding for the driver. In another example, the data processing system can determine the driver score for a driver based on a distance between the driving data and the average driving data of the drivers of the embedding. For example, the data processing system can determine a distance between the embedding of the driver and the centroid of the cluster containing the embedding. The data processing system can determine a driver score for the driver based on the distance such that the driver score for the driver is close to the cluster score for the cluster by a similar distance. For example, an embedding that is at the centroid of a cluster may have a driver score that matches the cluster score for the cluster containing the cluster but as the distance between the centroid and the embedding increases, the driver score may be further from the cluster score either in a positive or negative direction, depending on the location of the embedding relative to the centroid. In another example, the data processing system can determine a driver score for a driver based on a ratio or total number of driving attributes for a driver that match common driving attributes of the cluster the driver is associated with. The data processing system can generate a record (e.g., a file, notification, user interface, data structure, table, message, etc.) containing the driver score for each of the drivers represented in the clusters.

In some cases, the data processing system can determine or assign a driver score range for or to each of the clusters. One or more of the driver score ranges can include multiple driver scores. The data processing system can determine the score ranges based on driving data and/or traffic data of the drivers represented by embeddings within the cluster. For instance, the data processing system can apply one or more rules to the traffic data or driving data of a cluster to determine a driver score range for the cluster. The rules can be similar to the rules that can be used to determine cluster scores for clusters as described above. For example, the rules can indicate to increase or decrease the bounds of a driver score range based on a number of traffic accidents within the cluster, an average following distance, a number of traffic tickets or traffic infractions, an amount of time spent driving at night, a number of emergency brakes employed, etc. The data processing system can identify rules that are satisfied for a cluster and determine a driver score range for the cluster based on the satisfied rules. In some cases, the data processing system can employ a function on the traffic data and/or driving data. The function can be, for example, an average, a weighted average, a median, a sum, etc. The output of the function can be a value for the cluster. The data processing system can determine the driver score range to be within a defined range of the output value, for example, or have bounds determined according to the satisfied rules for the cluster.

The data processing system can determine driver scores for drivers of a cluster based on the driver score range of the cluster. The data processing system can do so using the centroid of the cluster. For example, the data processing system can determine a distance between an embedding within the cluster and the centroid of the cluster. If the embedding is the centroid or is at the centroid, the data processing system can determine the driver score for a driver associated with the embedding to be in the middle of the driver score range. Otherwise, the data processing system can change the driver score from the middle of the driver score range proportional to the distance of the embedding from the centroid. In doing so, the data processing system can keep the driver score within the driver score range.

The data processing system can determine the driver scores for drivers and transmit the driver scores to the electronic devices of the drivers. For example, the data processing system can store the driver scores in the accounts of the respective drivers and/or identify addresses of the electronic devices of the respective drivers from the accounts. The data processing system can transmit the driver scores to the electronic devices using the respective identified addresses. The electronic devices can receive the driver scores and display the driver scores on a user interface such that the drivers can determine their performance. Because the scores can be generated using clustering analysis, the driver scores can be generated relative to other drivers, giving the drivers an understanding of how the drivers score compared with other drivers, which can cause the drivers to drive more safely on the road in an attempt to improve their respective scores.

The data processing system can use the clusters of embeddings to aid in selective alert generation. For example, the data processing system can transmit identifications of driver scores or common driving attributes that exceed expected driving attributes by a threshold to computing devices of vehicles operated by the drivers that correspond with the respective driver scores or common driving attributes. The computing devices can input the scores or identifications of common driving attributes into a machine learning language processing model with text-based objects or a plurality of tokens generated from a sequence of images and perform the method 200 to generate a future state of the objects in an image based on the text-based objects or the plurality of tokens and/or the scores or identifications of common driving attributes. The computing devices can generate one or more alerts based on future states of the objects in the image or perform an autonomous driving action (e.g., automatic breaking or steering, such as to avoid an object indicated to be in front of the vehicle in the image of the future state of the object). Such can be beneficial because the common driving attributes or scores can represent how the respective drivers are driving and can provide more data that indicate how the driver will drive at a time in the future and make the predictions of the future state of objects surrounding the vehicles more accurate.

The data processing system can perform the method **800** and analysis for a fleet of vehicles. A fleet of vehicles can be vehicles that are owned and/or operated by an entity or group entity (e.g., an individual, an organization, or a corporation). The data processing system can collect driving data and/or traffic data of vehicles of the fleet. The data processing system can collect the driving data only from vehicles of the fleet. The data processing system can present any data generated when performing the method **800** (e.g., driver scores, common attributes between clusters, expected driving attributes, etc.) on a user interface to an administrator or operator of the fleet. The administrator can use the data for fleet administrator tasks such as driver selection for different routes.

In a non-limiting example, the data processing system can collect driving data from a large number of vehicles (e.g., thousands of vehicles). The data processing system can store the collected data and generate a dataset for each of the respective drivers of the vehicles. The data processing system can input the respective datasets into a machine learning language processing model and execute the machine learning language processing model to generate an embedding (e.g., an embedding of a fixed length) for each of the drivers. The data processing system can cluster the embeddings together in a vector space using a clustering computer model (e.g., a clustering machine learning model). The data processing system can identify common attributes of drivers of a cluster and determine which of the common attributes differ from an expected attribute by an amount above a threshold. For example, the data processing system may determine each driver of a cluster drives above the speed limit by at least 15 miles per hour. The data processing system can compare the 15 value to an expected value of zero (or another expected value, such as 10) to determine a difference between the 15 value and the expected value of zero. The data processing system can compare the difference to a threshold (e.g., 10). Responsive to determining the difference exceeds the threshold, the data processing system can transmit a message indicating to slow down to each driver of the cluster.

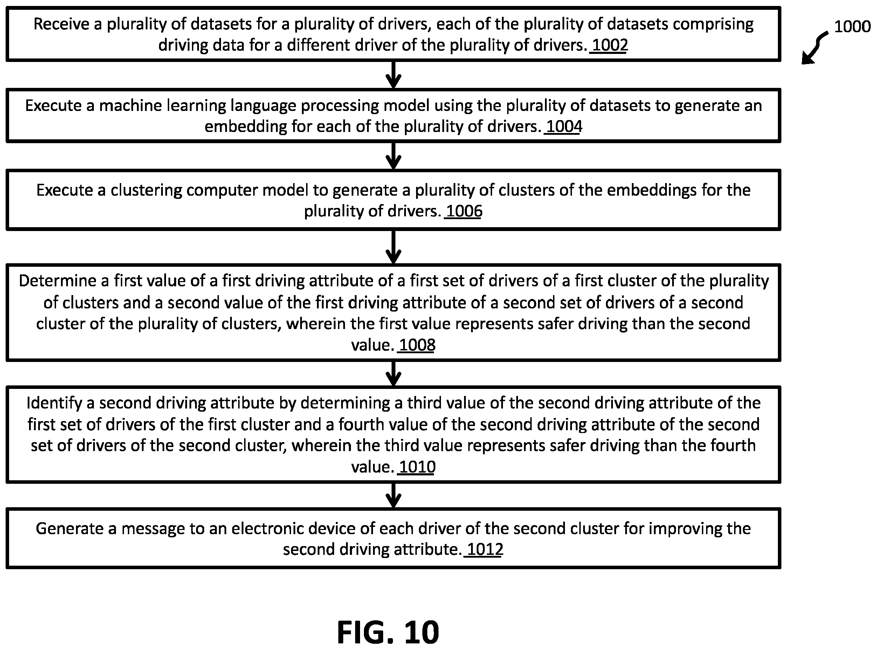

**FIG. 10** illustrates a flow of a method **1000** executed by a data processing system. The data processing system can be or include a computing system of a vehicle (e.g., the analytics server **708)** and/or a remote computing system (e.g., a cloud server or the cloud computing system **115)** for using a generative artificial intelligence model for vehicle analysis of a cohort of vehicles. The method **1000** is shown to include steps **1002-1010.** Different steps can be performed by different computing systems (e.g., the computing system of the vehicle can perform one or more of the steps **1002-1010** and/or the remote computing system can perform one or more of the steps **1002-1012**) and/or the different computing systems and can operate together to perform individual steps of the steps **1002-1010.**

In step **1002,** the data processing system receives a plurality of data sets for a plurality of drivers. Each of the plurality of datasets includes driving data for a different driver of the plurality of drivers. In step **1004,** the data processing system executes a machine learning model using the plurality of datasets to generate an embedding for each of the plurality of drivers. In step **1006,** the data processing system executes a clustering computer model to generate a plurality of clusters of the embeddings for the plurality of drivers. The data processing system may perform steps **1002-1006** while performing corresponding steps **802-806** or in the same manner as described above with respect to steps **802-806.**

In step **1008,** the data processing system determines a first value of a first driving attribute of a first set of drivers of a first cluster of embeddings and a second value of the first driving attribute of a second set of drivers of a second cluster of drivers. The first driving attribute can be any driving attribute that indicates how a driver can drive on the road and can be determined by datasets generated for individual drivers that are provided based on the vehicles that the drivers drive. For example, the first driving attribute can be or include an average number of accidents in which a driver is involved within a set time period, an average following distance, an average number of alerts generated indicating a vehicle is too close to another vehicle or object within a defined time period, an average speed, an average speed relative to a speed limit, etc. In some cases, the first driving attribute can be an attribute determined from traffic data received from a remote computing device. For example, the first attribute can be a number of traffic tickets received or a number of accidents in which a vehicle is involved. The second driving attribute can be or include the same types of driving attributes as the first driving attribute. In some cases, the first driving attribute can be a driving attribute generated or determined from traffic data and the second driving attribute can be a driving attribute generated or determined from driving data of drivers. For instance, the first driving attribute can be a number of accidents that occurred within a defined time period and the second driving attribute can be an average driving speed relative to a speed limit.

The data processing system can determine the first value of the first driving attribute of the first set of drivers of the first cluster by analyzing traffic data of drivers represented by the first cluster. In doing so, the data processing system can perform a function on or otherwise determine the first value of the first driving attribute based on values of the driving attribute for drivers of the first cluster. For example, the data processing system can identify the total number of accidents of each driver of the first cluster over a defined time period. The data processing system can determine an average, sum, median, etc., of the identified total number of accidents of drivers to generate the first value for the first driving attribute of total number of accidents within the defined time period. In another example, the data processing system can identify the average speed of the drivers of the first cluster to determine the first value for the first driving attribute of average speed. The data processing system can determine the first value for the first driving attribute using any method and for any attribute. The data processing system can similarly determine the second value of the first driving attribute for the second set of drivers of the second cluster using driving data of the second set of drivers.

The first value can represent safer driving than the second value. For example, the first value can indicate that the drivers of the first cluster are involved in fewer accidents than drivers of the second cluster. In another example, the first value can indicate the drivers of the first cluster drive closer to the speed limit than drivers of the second cluster. The values can represent safer driving according to a table that includes correlations regarding whether having a higher value is more dangerous or safer than a lower value for a driving attribute. For example, the table can include an indication that a higher number of accidents means a driver is less safe while driving too slow below the speed limit also means a driver is less safe, or vice versa. Both the first attribute and the second attribute can be represented in the table.

In some cases, the data processing system can select the first and/or second clusters based on cluster scores that are respectively associated with the first and/or second clusters. For example, the data processing system can determine cluster scores for the clusters of embeddings based on driving data and/or traffic data of the respective drivers within the cluster as described herein. The cluster scores can represent a safety score of the individual clusters of drivers as a whole. The data processing system can compare the cluster scores with each other and/or with different thresholds and/or criteria to determine which clusters of drivers to generate messages for improving driving. For example, the data processing system can identify the first cluster responsive to determining a first cluster score for the first cluster is above a threshold and/or based on the first cluster having a higher cluster score, or the highest cluster score, of the clusters. The data processing system can identify the second cluster responsive to determining a second cluster score for the second cluster is below a threshold (e.g., the same threshold) and/or based on the second cluster having a lower cluster score, or the lowest cluster score, of the clusters. In doing so, the data processing system can identify the first cluster as a cluster of safer drivers and the second cluster as a cluster of less safe drivers to use to generate recommendations to adjust the driving of the drivers of the less safe cluster (e.g., the second cluster) to be similar to the drivers of the safer cluster (e.g., the first cluster).

The data processing system can identify the first driving attribute responsive to determining the first value for the first attribute of the first cluster represents safer driving than the second value of the first attribute for the second cluster. For example, subsequent to identifying the first and second clusters, the data processing system can determine values for different driving attributes for the first cluster and the second cluster. The data processing system can compare the values of the driving attributes between the first cluster and the second cluster. The data processing system can identify the first driving attribute response to determining (e.g., using the look-up table) the first value for the first driving attribute of the first cluster represents safer driving than the second value for the first driving attribute of the second cluster.

For example, after identifying the first cluster and the second cluster, such as based on the cluster scores of the first cluster and the second cluster, the data processing system can determine values of different driving attributes of the first and second cluster. The data processing system can compare the values of the same attribute type between the clusters. The data processing system can determine that the drivers of the first cluster were involved in two accidents on average in the previous ten years and drivers of the second cluster were involved in that three accidents on average in the previous ten years. The data processing system can determine the first value (e.g., two accidents on average in the previous ten years) is less than the second value (e.g., three accidents on average in the previous ten years). The data processing system can use the table of correlations between values and driver safety to determine that the first value represents safer driving than the second value because the first value is lower than the second value. Based on the determination, the data processing system can use the first attribute to determine another attribute of the second cluster to improve the safety of the drivers of the second cluster.

In step **1010,** the data processing system identifies a second driving attribute. To do so, the data processing system determines a third value of the second driving attribute of the first set of drivers of the first cluster and a fourth value of the second driving attribute of the second set of drivers of the second cluster. The data processing system can determine the third value of the second driving attribute and the fourth value of the second driving attribute in a similar manner to how the data processing system determines the first value of the first driving attribute of the first cluster and the second value of the first driving attribute of the second cluster. For instance, the data processing system can determine the third value of the first cluster by determining the average time in which the drivers of the first cluster drive at night (e.g., after 10 PM) on a daily or weekly basis and the fourth value of the second cluster by determining the average time in which the drivers of the second cluster drive at night on a daily or weekly basis.

The data processing system can identify the second driving attribute responsive to determining the third value of the second driving attribute of the first cluster represents safer driving than the fourth value of the second driving attribute of the second cluster. For example, the data processing system can compare the third value to the fourth value to determine which value is higher or lower. The data processing system can use the table of correlations between values and driver safety to determine whether the third value represents safer driving than the fourth value based on whether the third value is higher or lower than the fourth value. Responsive to determining the third value represents safer driving, the data processing system can identify the second attribute as an attribute for the second cluster of drivers to improve upon for safer driving.

The data processing system can identify the second driving attribute based on a stored relationship between the second driving attribute and the first driving attribute in memory. For example, the data processing system can store a table of relationships between driving attributes in a one-to-one or a one-to-many configuration. The data processing system can determine the third value for the second driving attribute and the fourth value for the second driving attribute responsive to determining the first value represents safer driving than the second value of the first driving attribute and determining the second driving attribute has a stored relationship with the first driving attribute. The data processing system can identify each driving attribute with a stored relationship with the first driving attribute and determine values for the first and second cluster for the identified driving attributes. The data processing system can identify the second driving attribute based on the comparison and responsive to determining the third value for the second driving attribute represents safer driving than the fourth value for the second driving attribute. In some cases, the data processing system can identify multiple attributes with a stored relationship with the first attribute and with values for the first cluster that represent safer driving than values of the second cluster.

In step **1012,** the data processing system generates a message to an electronic device of each driver of the second cluster. The data processing system can perform step **1012** in the same or a similar manner to the manner described with respect to step **812.** The message can include a text indication for improving the second driving attribute. For instance, after determining the first cluster has a first value of the first attribute that represents safer driving than a second value of the first driving attribute of the second cluster, the data processing system can determine that the first cluster has a third value of the second driving attribute that is safer than a fourth value of the second driving attribute of the second cluster. Based on the determination, the data processing system can generate a message that identifies the second driving attribute with a text indication to improve the second driving attribute and transmit the message to the drivers (e.g., each driver) of the second cluster.

For example, the data processing system can determine that the first cluster of drivers typically only are involved in one accident every 10 years and drive at night for an average of 30 minutes a night, and the second cluster of drivers typically are involved in three accidents every 10 years and drive at night for an average of one hour a night. Because it is safer to be involved in one accident every 10 years than 3 accidents, and it is also safer to drive for 30 minutes at night than one hour, the data processing system can generate and transmit a message to the second cluster of drivers that are typically involved in three accidents every 10 years indicating to reduce their driving at night.

In some cases, the data processing system can include an indication of a magnitude by which to adjust the second attribute in the message to the second cluster of drivers. The data processing system can determine the magnitude as the difference between the third value of the second attribute for the third cluster and the fourth value of the second attribute for the fourth cluster. The data processing system can include the determined difference in the message to indicate to the second cluster of drivers how much to change their driving behavior to their driving or otherwise change their driving behavior to be closer to the driving behavior of the drivers of the first cluster of drivers.

In some cases, the data processing system can use the values of the driving attributes that computing devices of different vehicles can use to generate tokens indicating the future state of the environment surrounding or within the respective vehicles. For example, the data processing system can transmit the values of the driving attributes that the data processing system determines for the individual clusters to the vehicles associated with or otherwise represented in the respective clusters (e.g., through the drivers of the vehicles). A computing device of one or each of the vehicles can receive such values and use the values as input into a machine learning model with tokens (e.g., a first plurality of tokens) generated from a sequence of images depicting the environment around or within the vehicle, as described with respect to the method **200.** The machine learning model can generate a plurality of tokens (e.g., a second plurality of tokens) representing a future state of the environment (e.g., tokens of values that map to text or other data indicating the future state in a table). The computing device can use the plurality of tokens to determine whether to generate an alert and/or to make self-driving decisions. In using the values of the driving attributes of individual clusters, the data processing system can more accurately predict the future state of the environment surrounding environment and/or take into account characteristics of the individual drivers of the vehicles to predict how the drivers will react in different situations (e.g., whether a driver is likely to tailgate or drive to close to another vehicle or let another car into the driver's lane) and use the more accurate predictions for alert generation and/or self-driving decision-making (e.g., automatically slowing down or otherwise adjusting the speed of the vehicle or adjusting the position of the wheels of the vehicle). The data processing system can send and/or the computing devices can use any number of values of driving attributes of clusters in this manner.

In some cases, instead of using the values themselves, the data processing system or the computing devices of the vehicles can determine a category or label of the respective values of the driving attributes. For instance, the data processing system can compare a value of a driving speed attribute of a cluster to a threshold. Responsive to determining the value of the driving speed of the cluster is above the threshold, the data processing system can assign a fast driver label to the cluster. The data processing system can transmit the label to the computing devices that operate within the vehicles of the cluster and the computing devices can use the label as input into a machine learning model with tokens generated from a sequence of images to use to generate tokens representing the future state of the environment surrounding the vehicle for alert generation and/or self-driving decision-making, as described herein. In some cases, the computing devices of the vehicles can similarly generate and use such labels after the data processing system sends the values to the computing devices, which can enable the different computing devices to have separately configurable criteria and/or labels for different driving attributes. Using labels can provide more context to the values for the machine learning model to use to generate tokens predicting the future state of the environment surrounding the vehicle.

A computer program product may include a non-transitory computer-readable medium having instructions stored thereon, the instructions being executable by one or more processors configured to carry out any of the systems and/or methods described herein.

The various illustrative logical blocks, modules, circuits, and algorithm steps described in connection with the embodiments disclosed herein may be implemented as electronic hardware, computer software, or combinations of both. To illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of this disclosure or the claims.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc., may be passed, forwarded, or transmitted via any suitable means including memory sharing, message passing, token passing, network transmission, etc.

The actual software code or specialized control hardware used to implement these systems and methods is not limiting of the claimed features or this disclosure. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processorexecutable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The operations described in this specification can be implemented as operations performed by a data processing apparatus on data stored on one or more computer-readable storage devices or received from other sources.

The terms "data processing apparatus", "data processing system", "client device", "client computing device", "computing platform", "computing device", "computing system", "user device", or "device" can encompass all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA or an ASIC. The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read-only memory or a random access memory or both. The elements of a computer include a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a GPS receiver, a digital camera device, a video camera device, or a portable storage device (e.g., a universal serial bus (USB) flash drive), for example. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), plasma, or LCD monitor, for displaying information to the user; a keyboard; and a pointing device, e.g., a mouse, a trackball, or a touchscreen, by which the user can provide input to the computer. Other kinds of devices can be used to provide for interaction with a user as well; for example, feedback provided to the user can include any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user.

In certain circumstances, multitasking and parallel processing system may be advantageous. Moreover, the separation of various system components in the implementations described above should not be understood as requiring such separation in all implementations, and it should be understood that the described program components and systems can generally be integrated together in a single software product or packaged into multiple software products. For example, the computing devices described herein can each be a single module, a logic device having one or more processing modules, one or more servers, or an embedded computing device.

Having now described some illustrative implementations and implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed only in connection with one implementation are not intended to be excluded from a similar role in other implementations or implementations.

The phraseology and terminology used herein is for the purpose of description and should not be regarded as limiting. The use of "including," "comprising," "having," "containing," "involving," "characterized by," "characterized in that," and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation, and references to "an implementation," "some implementations," "an alternate implementation," "various implementation," "one implementation," or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

The preceding description of the disclosed embodiments is provided to enable any person skilled in the art to make or use the embodiments described herein and variations thereof. The present disclosure is not intended to be limited to the embodiments shown herein but is to be accorded the widest scope consistent with the following claims and the principles and novel features disclosed herein.

## Claims

1. A method comprising:
receiving (1002), by one or more processors, a plurality of datasets for a plurality of drivers, each of the plurality of datasets comprising driving data for a different driver of the plurality of drivers;
executing (1004), by the one or more processors, a machine learning language processing model using the plurality of datasets to generate an embedding for each of the plurality of drivers;
executing (1006), by the one or more processors, a clustering computer model to generate a plurality of clusters of the embeddings for the plurality of drivers;
determining (1008), by the one or more processors, a first value of a first driving attribute of a first set of drivers of a first cluster of the plurality of clusters and a second value of the first driving attribute of a second set of drivers of a second cluster of the plurality of clusters, wherein the first value represents safer driving than the second value; and
responsive to identifying (1010) by the one or more processors, a second driving attribute by determining a third value of a second driving attribute of the first set of drivers of the first cluster and a fourth value of the second driving attribute of the second set of drivers of the second cluster, wherein the third value represents safer driving than the fourth value,
generating (1012), by the one or more processors, a message to an electronic device of each driver of the second cluster for improving the second driving attribute.

2. The method of claim 1, further comprising:
receiving, by the one or more processors from a remote computer, traffic data regarding the plurality of drivers; and
determining, by the one or more processors, the first value of the first driving attribute of the first set of drivers and the second value of the first driving attribute of the second set of drivers of the second cluster of the plurality of clusters based on the received traffic data.

3. The method of claim 2, wherein determining the first value of the first driving attribute comprises determining, by the one or more processors, a first number of driving accidents in which the first set of drivers were involved within a defined time period,
and wherein determining the second value of the first driving attribute comprises determining, by the one or more processors, a second number of driving accidents in which the second set of drivers were involved within the defined time period, the second value higher than the first value.

4. The method of claim 3, wherein determining the third value of the second driving attribute comprises determining, by the one or more processors, a first average speed of the first set of drivers,
and wherein determining the fourth value of the second driving attribute comprises determining, by the one or more processors, a second average speed of the second set of drivers, the third value lower than the fourth value.

5. The method of claim 1, wherein determining the second value of the first driving attribute of the second set of drivers of the second cluster and the fourth value of the second driving attribute of the second set of drivers of the second cluster is performed responsive to determining, by the one or more processors, a second cluster score of the second cluster is lower than a threshold.

6. The method of claim 1, wherein determining the second value of the first driving attribute of the second set of drivers of the second cluster and the fourth value of the second driving attribute of the second set of drivers of the second cluster is performed responsive to determining, by the one or more processors, a second cluster score of the second cluster is lower than a first cluster score of the first cluster.

7. The method of claim 1, further comprising:
determining, by the one or more processors, a driver score for each of the plurality of drivers based on a cluster containing the embedding for the driver; and
generating, by the one or more processors, a record containing the driver score for each of the plurality of drivers.

8. The method of claim 7, wherein determining the driver score for each of the plurality of drivers comprises:
assigning, by the one or more processors, a different cluster score to each of the plurality of clusters; and
determining, by the one or more processors, the driver score for each of the plurality of drivers based on the cluster score assigned to the cluster containing the embedding for the driver.

9. The method of claim 8, further comprising:
receiving, by the one or more processors from a remote computer, traffic data regarding the plurality of drivers,
wherein assigning the cluster scores to the plurality of clusters comprises:
determining, by the one or more processors, a cluster score for a second cluster of the plurality of clusters based on received traffic data for the second cluster.

10. The method of claim 9, wherein determining the cluster score for the second cluster based on the received traffic data for the second cluster comprises:
determining, by the one or more processors, the cluster score based on a number of accidents or traffic infractions that are identified in the received traffic data for the second cluster.

11. The method of claim 1, further comprising:
assigning, by the one or more processors, a different driver score range to each of the plurality of clusters, at least one driver score range comprising a plurality of driver scores; and
determining, by the one or more processors, a driver score for each of the plurality of drivers based on the driver score range assigned to a cluster that includes the embedding for the driver.

12. The method of claim 1, wherein executing the machine learning language processing model using the plurality of datasets to generate the embedding for each of the plurality of drivers comprises:
executing, by the one or more processors, a neural network comprising a transformer model using the plurality of datasets to generate the embedding for each of the plurality of drivers.

13. A system comprising:
one or more processors configured by machine-readable instructions to perform the method of any preceding claim.

## Patentansprüche

1. Verfahren umfassend:
Empfangen (1002), durch einen oder mehrere Prozessoren, eine Vielzahl von Datensätzen für eine Vielzahl von Fahrern, wobei jeder der Vielzahl von Datensätzen Fahrdaten für einen unterschiedlichen Fahrer der Vielzahl von Fahrern umfasst;
Ausführen (1004), durch den einen oder die mehreren Prozessoren, ein Sprachverarbeitungsmodell des maschinellen Lernens unter Verwendung der Vielzahl von Datensätzen, um eine Einbettung für jeden der Vielzahl von Fahrern zu erzeugen;
Ausführen (1006), durch den einen oder die mehreren Prozessoren, ein Clustering-Computermodell, um eine Vielzahl von Clustern der Einbettungen für die Vielzahl von Fahrern zu erzeugen;
Bestimmen (1008), durch den einen oder die mehreren Prozessoren, einen ersten Wert eines ersten Fahrattributs eines ersten Satzes von Fahrern eines ersten Clusters der Vielzahl von Clustern und einen zweiten Wert des ersten Fahrattributs eines zweiten Satzes von Fahrern eines zweiten Clusters der Vielzahl von Clustern, wobei der erste Wert sichereres Fahren als der zweite Wert darstellt; und
als Reaktion auf das Identifizieren (1010) durch den einen oder die mehreren Prozessoren, ein zweites Fahrattribut durch Bestimmen eines dritten Werts eines zweiten Fahrattributs des ersten Satzes von Fahrern des ersten Clusters und eines vierten Werts des zweiten Fahrattributs des zweiten Satzes von Fahrern des zweiten Clusters, wobei der dritte Wert sichereres Fahren als der vierte Wert darstellt,
Erzeugen (1012), durch den einen oder die mehreren Prozessoren, eine Nachricht an ein elektronisches Gerät jedes Fahrers des zweiten Clusters zur Verbesserung des zweiten Fahrattributs.

2. Verfahren nach Anspruch 1, weiter umfassend:
Empfangen, durch den einen oder die mehreren Prozessoren von einem entfernten Computer, Verkehrsdaten bezüglich der Vielzahl von Fahrern; und
Bestimmen, durch den einen oder die mehreren Prozessoren, den ersten Wert des ersten Fahrattributs des ersten Satzes von Fahrern und den zweiten Wert des ersten Fahrattributs des zweiten Satzes von Fahrern des zweiten Clusters der Vielzahl von Clustern basierend auf den empfangenen Verkehrsdaten.

3. Verfahren nach Anspruch 2, wobei das Bestimmen des ersten Werts des ersten Fahrattributs das Bestimmen, durch den einen oder die mehreren Prozessoren, einer ersten Anzahl von Fahrunfällen umfasst, in die der erste Satz von Fahrern innerhalb eines definierten Zeitraums verwickelt war,
und wobei das Bestimmen des zweiten Werts des ersten Fahrattributs das Bestimmen, durch den einen oder die mehreren Prozessoren, eine zweite Anzahl von Fahrunfällen umfasst, in die der zweite Satz von Fahrern innerhalb des definierten Zeitraums verwickelt war, wobei der zweite Wert höher als der erste Wert ist.

4. Verfahren nach Anspruch 3, wobei das Bestimmen des dritten Werts des zweiten Fahrattributs das Bestimmen, durch den einen oder die mehreren Prozessoren, einer ersten Durchschnittsgeschwindigkeit des ersten Satzes von Fahrern umfasst,
und wobei das Bestimmen des vierten Werts des zweiten Fahrattributs das Bestimmen, durch den einen oder die mehreren Prozessoren, einer zweiten Durchschnittsgeschwindigkeit des zweiten Satzes von Fahrern umfasst, wobei der dritte Wert niedriger als der vierte Wert ist.

5. Verfahren nach Anspruch 1, wobei das Bestimmen des zweiten Werts des ersten Fahrattributs des zweiten Satzes von Fahrern des zweiten Clusters und des vierten Werts des zweiten Fahrattributs des zweiten Satzes von Fahrern des zweiten Clusters durchgeführt wird als Reaktion auf das Bestimmen, durch den einen oder die mehreren Prozessoren, dass eine zweite Clusterbewertung des zweiten Clusters niedriger als ein Schwellenwert ist.

6. Verfahren nach Anspruch 1, wobei das Bestimmen des zweiten Werts des ersten Fahrattributs des zweiten Satzes von Fahrern des zweiten Clusters und des vierten Werts des zweiten Fahrattributs des zweiten Satzes von Fahrern des zweiten Clusters durchgeführt wird als Reaktion auf das Bestimmen, durch den einen oder die mehreren Prozessoren, dass eine zweite Clusterbewertung des zweiten Clusters niedriger als eine erste Clusterbewertung des ersten Clusters ist.

7. Verfahren nach Anspruch 1, weiter umfassend:
Bestimmen, durch den einen oder die mehreren Prozessoren, eine Fahrerbewertung für jeden der Vielzahl von Fahrern, basierend auf einem Cluster, das die Einbettung für den Fahrer enthält; und
Erzeugen, durch den einen oder die mehreren Prozessoren, eine Aufzeichnung, die die Fahrerbewertung für jeden der Vielzahl von Fahrern enthält.

8. Verfahren nach Anspruch 7, wobei das Bestimmen der Fahrerbewertung für jeden der Vielzahl von Fahrern umfasst:
Zuweisen, durch den einen oder die mehreren Prozessoren, eine unterschiedliche Clusterbewertung zu jedem der Vielzahl von Clustern; und
Bestimmen, durch den einen oder die mehreren Prozessoren, die Fahrerbewertung für jeden der Vielzahl von Fahrern basierend auf der dem Cluster zugewiesenen Clusterbewertung, wobei das Cluster die Einbettung für den Fahrer enthält.

9. Verfahren nach Anspruch 8, weiter umfassend:
Empfangen, durch den einen oder die mehreren Prozessoren von einem entfernten Computer, Verkehrsdaten bezüglich der Vielzahl von Fahrern,
wobei das Zuweisen der Clusterbewertungen zu der Vielzahl von Clustern umfasst:
Bestimmen, durch den einen oder die mehreren Prozessoren, eine Clusterbewertung für ein zweites Cluster der Vielzahl von Clustern, basierend auf empfangenen Verkehrsdaten für das zweite Cluster.

10. Verfahren nach Anspruch 9, wobei das Bestimmen der Clusterbewertung für das zweite Cluster basierend auf den empfangenen Verkehrsdaten für das zweite Cluster umfasst:
Bestimmen, durch den einen oder die mehreren Prozessoren, die Clusterbewertung, basierend auf einer Anzahl von Unfällen oder Verkehrsverstößen, die in den empfangenen Verkehrsdaten für das zweite Cluster identifiziert werden.

11. Verfahren nach Anspruch 1, weiter umfassend:
Zuweisen, durch den einen oder die mehreren Prozessoren, einen unterschiedlichen Fahrerbewertungsbereich zu jedem der Vielzahl von Clustern, wobei mindestens ein Fahrerbewertungsbereich eine Vielzahl von Fahrerbewertungen umfasst; und
Bestimmen, durch den einen oder die mehreren Prozessoren, eine Fahrerbewertung für jeden der Vielzahl von Fahrern, basierend auf dem Fahrerbewertungsbereich, der einem Cluster zugewiesen ist, wobei das Cluster die Einbettung für den Fahrer umfasst.

12. Verfahren nach Anspruch 1, wobei das Ausführen des Sprachverarbeitungsmodells des maschinellen Lernens unter Verwendung der Vielzahl von Datensätzen, um die Einbettung für jeden der Vielzahl von Fahrern zu erzeugen, umfasst:
Ausführen, durch den einen oder die mehreren Prozessoren, eines neuronalen Netzes, das ein Transformermodell umfasst, unter Verwendung der Vielzahl von Datensätzen, um die Einbettung für jeden der Vielzahl von Fahrern zu erzeugen.

13. System, umfassend:
einen oder mehrere Prozessoren, die durch maschinenlesbare Anweisungen ausgebildet sind, das Verfahren nach einem der vorstehenden Ansprüche durchzuführen.

## Revendications

1. Procédé comprenant :
la réception (1002), par un ou plusieurs processeurs, d'une pluralité d'ensembles de données pour une pluralité de conducteurs, chaque ensemble de données de la pluralité d'ensembles de données comprenant des données de conduite pour un conducteur différent de la pluralité de conducteurs ;
l'exécution (1004), par le ou les processeurs, d'un modèle de traitement du langage d'apprentissage automatique utilisant la pluralité d'ensembles de données pour générer une représentation vectorielle pour chaque conducteur de la pluralité de conducteurs ;
l'exécution (1006), par le ou les processeurs, d'un modèle informatique de regroupement pour générer une pluralité de groupes de représentations vectorielles pour la pluralité de conducteurs ;
la détermination (1008), par le ou les processeurs, d'une première valeur d'un premier attribut de conduite d'un premier ensemble de conducteurs d'un premier groupe de la pluralité de groupes et d'une deuxième valeur du premier attribut de conduite d'un second ensemble de conducteurs d'un second groupe de la pluralité de groupes, ladite première valeur représentant une conduite plus sûre que la deuxième valeur ; et
en réponse à l'identification (1010), par le ou les processeurs, d'un second attribut de conduite en déterminant une troisième valeur d'un second attribut de conduite du premier ensemble de conducteurs du premier groupe et une quatrième valeur du second attribut de conduite du second ensemble de conducteurs du second groupe, ladite troisième valeur représentant une conduite plus sûre que la quatrième valeur,
la génération (1012), par le ou les processeurs, d'un message à un dispositif électronique de chaque conducteur du second groupe pour améliorer le second attribut de conduite.

2. Procédé selon la revendication 1, comprenant en outre :
la réception, par le ou les processeurs depuis un ordinateur distant, de données de circulation concernant la pluralité de conducteurs ; et
la détermination, par le ou les processeurs, de la première valeur du premier attribut de conduite du premier ensemble de conducteurs et de la deuxième valeur du premier attribut de conduite du second ensemble de conducteurs du second groupe de la pluralité de groupes sur la base des données de circulation reçues.

3. Procédé selon la revendication 2, dans lequel la détermination de la première valeur du premier attribut de conduite comprend la détermination, par le ou les processeurs, d'un premier nombre d'accidents de conduite dans lesquels le premier ensemble de conducteurs a été impliqué au cours d'une période définie,
et dans lequel la détermination de la deuxième valeur du premier attribut de conduite comprend la détermination, par le ou les processeurs, d'un second nombre d'accidents de conduite dans lesquels le second ensemble de conducteurs a été impliqué au cours de la période définie, la deuxième valeur étant supérieure à la première valeur.

4. Procédé selon la revendication 3, dans lequel la détermination de la troisième valeur du second attribut de conduite comprend la détermination, par le ou les processeurs, d'une première vitesse moyenne du premier ensemble de conducteurs,
et dans lequel la détermination de la quatrième valeur du second attribut de conduite comprend la détermination, par le ou les processeurs, d'une seconde vitesse moyenne du second ensemble de conducteurs, la troisième valeur étant inférieure à la quatrième valeur.

5. Procédé selon la revendication 1, dans lequel la détermination de la deuxième valeur du premier attribut de conduite du second ensemble de conducteurs du second groupe et de la quatrième valeur du second attribut de conduite du second ensemble de conducteurs du second groupe est réalisée en réponse à la détermination, par le ou les processeurs, qu'un second score de groupe du second groupe est inférieur à un seuil.

6. Procédé selon la revendication 1, dans lequel la détermination de la deuxième valeur du premier attribut de conduite du second ensemble de conducteurs du second groupe et de la quatrième valeur du second attribut de conduite du second ensemble de conducteurs du second groupe est réalisée en réponse à la détermination, par le ou les processeurs, qu'un second score de groupe du second groupe est inférieur à un premier score de groupe du premier groupe.

7. Procédé selon la revendication 1, comprenant en outre :
la détermination, par le ou les processeurs, d'un score de conducteur pour chaque conducteur de la pluralité de conducteurs sur la base d'un groupe contenant la représentation vectorielle pour le conducteur ; et
la génération, par le ou les processeurs, d'un enregistrement contenant le score de conducteur pour chaque conducteur de la pluralité de conducteurs.

8. Procédé selon la revendication 7, dans lequel la détermination du score de conducteur pour chaque conducteur de la pluralité de conducteurs comprend :
l'attribution, par le ou les processeurs, d'un score de groupe différent à chaque groupe de la pluralité de groupes ; et
la détermination, par le ou les processeurs, du score de conducteur pour chaque conducteur de la pluralité de conducteurs sur la base du score de groupe attribué au groupe contenant la représentation vectorielle pour le conducteur.

9. Procédé selon la revendication 8, comprenant en outre :
la réception, par le ou les processeurs depuis un ordinateur distant, de données de circulation concernant la pluralité de conducteurs,
dans lequel l'attribution des scores de groupe à la pluralité de groupes comprend :
la détermination, par le ou les processeurs, d'un score de groupe pour un second groupe de la pluralité de groupes sur la base de données de circulation reçues pour le second groupe.

10. Procédé selon la revendication 9, dans lequel la détermination du score de groupe pour le second groupe sur la base des données de circulation reçues pour le second groupe comprend :
la détermination, par le ou les processeurs, du score de groupe sur la base d'un nombre d'accidents ou d'infractions au code de la route qui sont identifiés dans les données de circulation reçues pour le second groupe.

11. Procédé selon la revendication 1, comprenant en outre :
l'attribution, par le ou les processeurs, d'une plage de scores de conducteur différente à chaque groupe de la pluralité de groupes, au moins une plage de scores de conducteur comprenant une pluralité de scores de conducteur ; et
la détermination, par le ou les processeurs, d'un score de conducteur pour chaque conducteur de la pluralité de conducteurs sur la base de la plage de scores de conducteur attribuée à un groupe qui comprend la représentation vectorielle pour le conducteur.

12. Procédé selon la revendication 1, dans lequel l'exécution du modèle de traitement du langage d'apprentissage automatique utilisant la pluralité d'ensembles de données pour générer la représentation vectorielle pour chaque conducteur de la pluralité de conducteurs comprend :
l'exécution, par le ou les processeurs, d'un réseau neuronal comprenant un modèle transformateur utilisant la pluralité d'ensembles de données pour générer la représentation vectorielle pour chaque conducteur de la pluralité de conducteurs.

13. Système comprenant :
un ou plusieurs processeurs configurés par des instructions lisibles par machine pour réaliser le procédé selon une quelconque revendication précédente.
